# EUROPÄISCHE PATENTSCHRIFT

(11) **EP 4 559 808 B1**
(45) Veröffentlichungstag und Bekanntmachung des Hinweises auf die Patenterteilung: **03.06.2026**
(21) Anmeldenummer: 23211565.9
(22) Anmeldetag: 22.11.2023
(51) Int. Cl.: B64C 29/00, B64C 27/28

(54) **LUFTFAHRZEUG MIT ANTRIEBSPROPELLERN UNTERHALB DER TRAGFLÜGEL**
AIRCRAFT WITH DRIVE PROPELLERS BELOW AEROFOILS
AÉRONEF AVEC DES HÉLICES PROPULSIVES SOUS LES AILES PORTANTES

(43) Veröffentlichungstag der Anmeldung: 28.05.2025
(73) Patentinhaber: Eisenmann, Siegfried A., 88326 Aulendorf (DE)
(72) Erfinder: Eisenmann, Siegfried A., 88326 Aulendorf (DE)
(74) Vertreter: Kaminski Harmann

(56) Entgegenhaltungen:
- WO-A1-2021/010915
- WO-A2-2012/080737
- CH-A- 380 540
- DE-U1- 202019 000 936
- US-A- 1 872 845
- US-B1- 10 589 838
- US-B2- 6 655 631

## Beschreibung

### Gebiet der Erfindung

Die vorliegende Erfindung betrifft ein Luftfahrzeug geeignet zum Vertikalflug und zum Horizontalflug.

### Hintergrund der Erfindung

Die in den Offenbarungen US 1,872,845, DE202017006138U1, DE202019000936U1, DE202019002731U1 und EP21210288.3 gezeigten Luftfahrzeuge haben sogenannte "Tiltflügel" (d.h. Tragflügelteile, die sich neigen lassen) und an diesen jeweils befestigte "Tiltrotoren" (d.h. Propeller), wodurch eine sinnvolle Trennung des Steigfluges (vertikal) und des Geschwindigkeitsfluges (horizontal) ermöglicht ist. Bei den Luftfahrzeugen des Stands der Technik werden für den Vertikalflug (Senkrechtstart) alle Tragflügelteile aus ihrer Waagrechtposition derart um etwa 90 Grad geneigt, dass alle Propeller über den Tragflügeln vorliegen. Die durch die Rotation der Propeller erzeugten Luftströme verlaufen daher in Richtung des Bodens, wodurch an dem jeweiligen Propeller eine Auftriebskraft vorliegt, die senkrecht nach oben, also vom Boden weg, gerichtet ist

Bei einer Anordnung aller Propeller während des Senkrechtflugs über den Tragflügeln wie beim Stand der Technik, die dann für den Waagerechtflug nach vorne (bei den Frontpropellern) und nach hinten (bei den Heckpropellern) ausgerichtet werden, ist es je nach Flugrichtung entweder für die Frontpropeller oder die Heckpropeller notwendig, dass entweder die Rotationsrichtung der entsprechenden Propellerrotoren umgekehrt wird oder der Blatteinstellwinkel der entsprechenden Propellerrotoren geändert wird, da sonst die durch die Rotation der Propellerrotoren der Frontpropeller verursachten Luftströme in eine entgegengesetzte Richtung verlaufen als die durch die Rotation der Propellerrotoren der Heckpropeller verursachten Luftströme. Solche entgegengesetzt verlaufenden Luftströme würden unter anderem dazu führen, dass sich das Luftfahrzeug beim Waagrechtflug im Kreis dreht, statt sich in die gewünschte Flugrichtung fortzubewegen.

Eine Umkehrung der Drehrichtung der Propellerrotoren oder eine Änderung des Blatteinstellwinkels der Propellerrotoren muss jedoch exakt, schnell und zeitlich abgestimmt ablaufen, was wiederum eine zusätzliche, leistungsfähige Steuerungseinheit erfordert, die die entsprechenden Schritte präzise steuert, wodurch der Übergang vom Senkrechtflug zum Waagrechtflug bei Luftfahrzeugen des Stands der Technik durchaus ein aufwändiges und sicherheitsrelevantes Unterfangen ist. Wird nämlich die Umkehrung der Drehrichtung oder die Änderung des Blatteinstellwinkels der Propellerrotoren durch die Steuerungseinheit nicht hinreichend präzise gesteuert (z.B. aufgrund eines Fehlers in der Steuerungseinheit bzw. einer Störung bei einem der Steuerungsprozesse), können die Propellerrotoren zum Beispiel zu lange stillstehen oder die Antriebskraft nicht optimal gerichtet sein, was wiederum zu Leistungseinbussen bei der Beschleunigung des Luftfahrzeugs, zu Turbulenzen wie zum Beispiel Dreh-, Wank-, Schlinger- oder Ruckelbewegungen, zu einem ungeplanten und ruckartigen Absacken des Luftfahrzeugs und/oder im schlimmsten Fall sogar zu einem Absturz des Luftfahrzeugs führen kann.

### Aufgabe der Erfindung

Es ist deshalb eine Aufgabe der Erfindung, ein Luftfahrzeug bereitzustellen, die die Nachteile aus dem Stand der Technik überwindet, insbesondere im Lichte der Simplizität und Effizienz.

Eine weitere Aufgabe liegt darin, ein Luftfahrzeug bereitzustellen, das einen vereinfachten Übergang vom Senkrechtflug (Vertikalflug) in den Waagrechtflug (Horizontalflug) oder umgekehrt ermöglicht.

Eine weitere Aufgabe liegt darin, ein Luftfahrzeug bereitzustellen, das einen effizienteren und langlebigeren Antrieb aufweist.

Diese Aufgaben werden durch die Verwirklichung zumindest eines Teils der kennzeichnenden Merkmale der unabhängigen Patentansprüche gelöst. Merkmale, welche die Erfindung in alternativer oder vorteilhafter Weise weiterbilden, sind einigen der übrigen Merkmale der unabhängigen Patentansprüche und den abhängigen Patentansprüchen zu entnehmen.

### Zusammenfassung der Erfindung

Die Erfindung betrifft ein Luftfahrzeug geeignet zum Vertikalflug und zum Horizontalflug, wobei das Luftfahrzeug eine Transportkabine, insbesondere eine Passagierkabine, und zwei jeweils an der Transportkabine, insbesondere an einem Dach der Transportkabine, angeordnete Tragflügel aufweist, wobei
- jeweils einer der beiden Tragflügel einen ersten und einen zweiten Tragflügelteil aufweist,
- jeder der Tragflügelteile relativ zum restlichen Tragflügel ("restlicher Tragflügel" gleich "Tragflügel" minus "Tragflügelteile") befestigt, insbesondere um bis zu 90 Grad, um eine jeweilige Schwenkachse ausschwenkbar ausgebildet ist,
- jeder der Tragflügelteile aufweist
   ∘ zumindest einen Propeller, der im Tragflügelteil rotierbar um eine Rotationsachse gelagert ist und der in Bezug auf die Schwenkachse gegenüber zumindest einem Grossteil des Tragflügelteils angeordnet ist, wobei der Propeller im Wesentlichen senkrecht zu einer Profilsehne des Tragflügelteils steht,
   ∘ einen Propellermotor ausgebildet zur Rotation des Propellers, und
   ∘ ein erstes Getriebe zur Wirkverbindung zwischen dem Propeller und dem Propellermotor,
wobei
- der erste Tragflügelteil des jeweiligen Tragflügels derart ausschwenkbar ist, dass im ausgeschwenkten Zustand der Propeller des ersten Tragflügelteils oberhalb des Tragflügels vorliegt,
- der zweite Tragflügelteil des jeweiligen Tragflügels derart ausschwenkbar ist, dass im ausgeschwenkten Zustand der Propeller des zweiten Tragflügelteils unterhalb des Tragflügels vorliegt, und
- jeder der Tragflügel mindestens ein Schwenkmittel aufweist, wobei mittels des mindestens einen Schwenkmittels eine Ausschwenkung und/oder eine Rückstellung der Ausschwenkung des ersten und/oder des zweiten Tragflügelteils bereitstellbar ist, wobei das Luftfahrzeug zwei Hilfsflügel aufweist, wobei jeweils einer der beiden Hilfsflügel an einer Längsseite, insbesondere an einem unteren Bereich der Längsseite, der Transportkabine angeordnet ist,
wobei die zwei Hilfsflügel dazu ausgebildet sind, ein geschwindigkeitsproportionales Gegenmoment zu erzeugen, mittels welchem ein, insbesondere durch die Transportkabine und/oder den Berührschutz erhöhter, Luftwiderstand des Luftfahrzeugs ausgleichbar ist, wodurch eine Nickbewegung einer Front des Luftfahrzeugs, insbesondere beim Waagrechtflug, verhinderbar ist und so eine Stabilisierung der Flugeigenschaften des Luftfahrzeugs erreichbar ist.

Das erfindungsgemässe Luftfahrzeug hat gegenüber Luftfahrzeugen aus dem Stand der Technik unter anderem den Vorteil, dass durch das Vorliegen des Propellers des jeweiligen zweiten Tragflügelteils unterhalb des jeweiligen Tragflügels beim Übergang vom Senkrechtflug (Start) zum Waagerechtflug auf
- ein Umkehren der Drehrichtung (Rotationsrichtung) der Propellerrotoren des jeweiligen ersten Tragflügelteils oder des jeweiligen zweiten Tragflügelteils (je nachdem, welches Tragflügelteil den Frontpropeller und welches den Heckpropeller bereitstellt und je nach Flugrichtung), oder
- ein Verändern des Blatteinstellwinkels der Propellerrotoren und somit die Umkehrung der Richtung der Antriebskraft (bzw. des Auftriebs) des entsprechenden Propellers, beispielsweise mittels einer Pitchregelung, verzichtet werden kann.

Durch die erfindungsgemässe Anordnung des jeweiligen zweiten Tragflügelteils unterhalb des jeweiligen Tragflügels sind, sobald die Position der Tragflügelteile und somit der Propeller für den Waagrechtflug eingenommen wurde, die Luftströme der durch die Rotation der Propellerrotoren der Frontpropeller verursachten Luftströme in die gleiche Richtung gerichtet als die durch die Rotation der Propellerrotoren der Heckpropeller verursachten Luftströme.

Das erfindungsgemässe Luftfahrzeug kann sich also ohne Umkehrung der Drehrichtung oder Änderung der Blatteinstellwinkel der Propellerrotoren des jeweiligen ersten Tragflügelteils oder des jeweiligen zweiten Tragflügelteils gezielt in Flugrichtung fortbewegen, wodurch auf eine für die präzise Steuerung der Umkehrung der Drehrichtung oder der Änderung des Blatteinstellwinkels vorgesehene leistungsstarke Steuerungseinheit sowie entsprechende komplexe Steuerungsprozesse verzichtet werden kann. Folglich liegt bei dem erfindungsgemässen Luftfahrzeug zum einen ein generell vereinfachter Aufbau und zum anderen ein vereinfachter Übergang vom Senkrechtflug zum Waagrechtflug vor, was gerade im Hinblick auf die Effizienz und Simplizität ein grosser Vorteil gegenüber dem Stand der Technik ist.

Insbesondere dadurch, dass auf eine Steuerungseinheit sowie entsprechende komplexe Steuerungsprozesse verzichtet werden kann, ist der Übergang vom Senkrechtflug zum Waagrechtflug bei dem erfindungsgemässen Luftfahrzeug weniger störanfällig, was im Hinblick auf die Flugsicherheit von grosser Bedeutung ist, da eine Störung (z.B. eine Ungenauigkeit oder gar ein kompletter Ausfall der Steuerung) bei diesem Schritt, wie bereits beschrieben, erhebliche Konsequenzen haben kann. Weiterhin werden dadurch, dass die durch die Propeller verursachten Luftströme bereits wie gewünscht verlaufen und somit während des Übergangs vom Senkrechtflug zum Waagrechtflug keine unerwünschten Bewegungen des Luftfahrzeugs auftreten, weitere komplexe Flugstabilisierungsmassnahmen, die wiederrum weitere komplizierte Steuerungssysteme notwendig machen, unnötig.

In einer exemplarischen Ausführungsform des erfindungsgemässen Luftfahrzeugs ist das mindestens eine Schwenkmittel als Kettenantrieb ausgebildet, wobei der Kettenantrieb ein erstes Kettenrad und ein zweites Kettenrad aufweist, wobei mittels einer (Dreh-) Bewegung des ersten Kettenrads eine Bewegung einer Kette des Kettenantriebs bereitstellbar ist, wobei mittels der Bewegung der Kette des Kettenantriebs das zweite Kettenrad antreibbar ist, wobei mittels des angetriebenen zweiten Kettenrad die Ausschwenkung und/oder die Rückstellung der Ausschwenkung (Einschwenken) des ersten und/oder des zweiten Tragflügelteils bereitstellbar ist.

Diese Ausführungsform des erfindungsgemässen Luftfahrzeugs hat gegenüber Luftfahrzeugen aus dem Stand der Technik unter anderem den Vorteil, dass das Schwenkmittel sehr einfach und platzsparend ausgestaltet werden kann.

In einer weiteren exemplarischen Ausführungsform des erfindungsgemässen Luftfahrzeugs weist jeder der Tragflügel auf
- mindestens einen Schrittmotor ausgebildet zum Antrieb mindestens eines Schwenkmittels (bzw. Kettenantriebs), und/oder
- zumindest eine zweite Antriebsbatterie ausgebildet zur Versorgung des mindestens einen Schrittmotors mit elektrischer Energie, wobei die zweite Antriebsbatterie so im oder am Tragflügel angeordnet ist, dass sie dort austauschbar und/oder aufladbar ist,
insbesondere wobei zur Wirkverbindung zwischen dem mindestens einem Schrittmotor und mindestens einem Schwenkmittel (bzw. Kettenantrieb) mindestens ein zweites Getriebe angeordnet ist.

Mit anderen Worten kann das erste Kettenrad des Kettenantriebs von einem Schrittmotor, der wiederum mit einem zweiten Getriebe in Wirkverbindung steht, angetrieben werden, wobei durch die (Dreh-) Bewegung des ersten Kettenrads die über das erste Kettenrad geführte Kette ebenfalls in Bewegung versetzt wird. Die Kette ist über das auf Höhe der Schwenkachse des entsprechenden Tragflügelteils angeordnete zweite Kettenrad geführt und überträgt so ihre Bewegungsenergie an das zweite Kettenrad, welches dadurch ebenfalls in eine (Dreh-) Bewegung versetzt wird. Das zweite Kettenrad überträgt dann seine Bewegungsenergie auf eine an dem zweiten Kettenrad angeordnete (Antriebs-) Welle, welche wiederum für das Aus- oder Einschwenken des entsprechenden Tragflügelteils sorgt.

In einer weiteren exemplarischen Ausführungsform ist das erste Getriebe und/oder das zweite Getriebe ein Exzentergetriebe, insbesondere ein Doppel-Exzentergetriebe.

In einer weiteren exemplarischen Ausführungsform weist das jeweilige Exzentergetriebe eine Innenverzahnung mit einer Zahndifferenz im Bereich von 0 bis 5 Zähnen, insbesondere von einem Zahn, auf, insbesondere wobei eine Zahnform der Zähne des jeweiligen Exzentergetriebes dergestalt ist, dass das jeweilige Exzentergetriebe eine Ovalverzahnung aufweist.

Diese Ausführungsformen haben den Vorteil, dass, da ein Exzentergetriebe, insbesondere ein Doppel-Exzentergetriebe, geringe Reibungsverluste, eine erhöhte Langlebigkeit, eine erhöhte Stabilität auch bei hohen Umdrehungszahlen, eine geeignete Untersetzung, etc. aufweist, das erfindungsgemässe Luftfahrzeug, insbesondere im Hinblick auf das erste Getriebe, einen effizienten und verschleissarmen (und somit langlebigeren) Antrieb aufweist.

Weiterhin ermöglichen Exzentergetriebe die Übertragung von hohen (Dreh-) Momenten sowie hohen Untersetzungen bei kompakter Bauweise und minimalem Verdrehspiel und dadurch eine hohe Präzision über die gesamte Lebensdauer (z.B. Hystereseverlust 0,5 bis max. 1 arcmin). Die hohe Präzision hat außerdem den Nebeneffekt, dass der Übertragungsfehler im Getriebe äußerst gering ist. Dadurch bleibt die Antriebsdrehzahl sehr konstant. Das zweistufige Untersetzungsprinzip bei einem Doppel-Exzentergetriebe sorgt zudem für ein exzellentes Verhalten hinsichtlich Dynamik und Laufruhe sowie eine hohe Wiederhol- und Bahngenauigkeit. Das Getriebe nimmt axiale sowie radiale Lasten und Biegemomente auf und trägt zur hohen Torsionssteifigkeit sowie Widerstandsfähigkeit gegen Stoß- und Überbelastung bei. In Not-Halt-Situationen können die Exzentergetriebe bis zu 500 % des Nenndrehmoments aufnehmen. Dies ist insbesondere bei Luftfahrzeugen von grosser Bedeutung, da ein Ausfall des Propellergetriebes während des Flugs aufgrund eines Defekts zu einem Absturz des Luftfahrzeugs führen kann.

Aufgrund der zuvor beschriebenen Ausgestaltung des zweiten Getriebes, insbesondere als (Doppel-) Exzentergetriebe, ist die Übertragung eines hohen Dreh- und Haltemoments auf das erste Kettenrad des ersten Kettenantriebs bzw. auf das erste Kettenrad des zweiten Kettenantriebs möglich, wodurch das jeweilige erste Kettenrad eine kontrollierte, stufenweise (Dreh-) Bewegung ausüben kann.

Das zweite Getriebe kann dabei derart ausgestaltet sein, dass mittels des zweiten Getriebes sowohl positive als auch negative (Dreh-) Momente auf das erste Kettenrad des Kettenantriebs übertragen werden können. Das entsprechende Drehmoment wird über die Kette des Kettenantriebs an das zweite Kettenrad und somit (z.B. über eine entsprechende (Antriebs-) Welle) an das entsprechende Tragflügelteil übertragen. Somit kann mittels des als Kettenantrieb ausgestalteten Schwenkmittels sowohl die Ausschwenkbewegung, welche beispielsweise ein positives Drehmoment hat, als auch die Einschwenkbewegung, welche dementsprechend beispielsweise ein negatives Drehmoment hat, ausgeführt werden.

In einer exemplarischen Ausführungsform des erfindungsgemässen Luftfahrzeugs weist das erste Kettenrad des Kettenantriebs einen kleineren Durchmesser auf als das zweite Kettenrad des Kettenantriebs, insbesondere wobei der Durchmesser des ersten Kettenrads um den Faktor 2 bis 4 kleiner ist als der Durchmesser des zweiten Kettenrads.

Die Ausgestaltung des ersten Kettenrads mit einem verkleinerten Durchmesser bzw. einer verkleinerten Fläche als das zweite Kettenrad erlaubt dem als Kettenantrieb ausgestalteten Schwenkmittel die Erzeugung eines vergrösserten Dreh- und Haltemoments am zweiten Kettenrad, wobei dieses vergrösserte Drehmoment über die an dem zweiten Kettenrad angeordnete (Antriebs-) Welle auf das jeweilige Tragflügelteil übertragen wird und so das Ausschwenken bzw. Einschwenken des jeweiligen Tragflügelteils mit einem grossen Dreh- und Haltemoment erfolgt. Ein solch grosses Dreh- und Haltemoment beim Ausschwenken bzw. Einschwenken des jeweiligen Tragflügelteils ist vorteilhaft, da dadurch selbst bei einem grossen Winddruck, der beim Flug auf das jeweilige Tragflügelteil einwirkt, dessen Ausschwenk- bzw. Einschwenkbewegung stufenweise (d.h. dass die Ausschwenk- oder Einschwenkbewegung nach Erreichen eines gewünschten Neigungswinkels / Tiltwinkels gestoppt und die Position des entsprechenden Teilflügelteils in diesem Neigungswinkel gehalten werden kann), zuverlässig und mit der gewünschten Präzision (z.B. bezüglich des Tiltwinkels) und Geschwindigkeit ausgeführt werden kann. Gerade bei grösseren Fluggeschwindigkeiten wirkt ein enormer Winddruck auf das jeweilige Tragflügelteil ein, welcher dessen Ausschwenk- bzw. die Einschwenkbewegung beeinträchtigen oder gar verhindern könnte, wenn das durch das entsprechende Schwenkmittel (hier der Kettenantrieb) erzeugte Drehmoment beim Ausschwenken bzw. Einschwenken des jeweiligen Tragflügelteils zu gering wäre. Weiterhin könnten die Tragflügelteile bei einem zu geringen Haltemoment durch den Winddruck aus ihrer eingestellten Winkelposition gedrückt werden, wodurch die Flugeigenschaften des Luftfahrzeugs massgeblich beeinträchtigt wären.

In einer exemplarischen Ausführungsform des erfindungsgemässen Luftfahrzeugs weist jeweils einer der beiden Tragflügel ein erstes Schwenkmittel und ein zweites Schwenkmittel auf, wobei mittels des ersten Schwenkmittels die Ausschwenkung und/oder die Rückstellung der Ausschwenkung (oder auch das Einschwenken) des ersten Tragflügelteils des jeweiligen Tragflügels und mittels des zweiten Schwenkmittels die Ausschwenkung und/oder die Rückstellung der Ausschwenkung (oder auch das Einschwenken) des zweiten Tragflügelteils des jeweiligen Tragflügels bereitstellbar ist.

In einer weiteren exemplarischen Ausführungsform des erfindungsgemässen Luftfahrzeugs ist das erste Schwenkmittel des jeweiligen Tragflügels als ein erster Kettenantrieb und das zweite Schwenkmittel des jeweiligen Tragflügels als ein zweiter Kettenantrieb ausgebildet.

Bei diesen Ausführungsformen können das erste Tragflügelteil und das zweite Tragflügelteil eines jeweiligen Tragflügels unabhängig voneinander ausgeschwenkt bzw. zurück in die eingeschwenkte (bzw. eingeklappte) Position geschwenkt werden. Weiterhin kann das jeweilige Tragflügelteil schrittweise bis zu einem gewünschten Neigungswinkel / Tiltwinkel aus- oder eingeschwenkt werden und bei dieser Winkelposition, die beispielsweise von der waagrechten und der senkrechten Winkelposition abweicht, gehalten werden.

Das erste Kettenrad des ersten Kettenantriebs und das erste Kettenrad des zweiten Kettenantriebs können dabei von jeweils einem Schrittmotor, der wiederum mit jeweils einem zweiten Getriebe in Wirkverbindung steht, angetrieben werden. In einer alternativen Ausführungsform können das erste Kettenrad des ersten Kettenantriebs und das erste Kettenrad des zweiten Kettenantriebs von einem einzigen Schrittmotor, der wiederum mit nur einem zweiten Getriebe in Wirkverbindung steht, angetrieben werden, wobei dieses zweite Getriebe derart schaltbar ist, dass entweder das erste Kettenrad des ersten Kettenantriebs oder das erste Kettenrad des zweiten Kettenantriebs angetrieben wird.

Es versteht sich, dass das erste und/oder das zweite Kettenrad nicht unbedingt kreisrund sein muss. Es ist prinzipiell jede Form (z.B. auch eine polygone oder rechteckige Form) des entsprechenden Kettenrades möglich, es geht schlussendlich nur darum, mittels einer (Dreh-) Bewegung des ersten Kettenrades die Kette in Bewegung zu versetzen und so das Drehmoment auf das zweite Kettenrad zu übertragen. Weiterhin kann statt der Kette beispielsweise auch ein Seil oder eine Stangenkonstruktion verwendet werden, es geht schlussendlich nur darum das Drehmoment vom ersten Kettenrad auf das zweite Kettenrad zu übertragen. Hierfür wäre es auch möglich, das erste und das zweite Kettenrad einteilig auszugestalten, es ist nur wichtig, dass das vom Schrittmotor erzeugte und vom zweiten Getriebe übertragene Drehmoment auf die (Antriebs-) Welle, die das Aus- bzw. Einschwenken des jeweiligen Tragflügelteils bereitstellt, übertragen werden kann. Weiterhin muss das (jeweilige) Schwenkmittel nicht zwangsweise ein Kettenantrieb sein. Es sind auch Ausführungsformen realisierbar, bei denen das Schwenkmittel ein Seil- oder Kettenzug ist, wobei ein Ende des Seils bzw. der Kette des Seil- oder Kettenzugs an dem entsprechenden Tragflügelteil und das andere Ende des Seils bzw. der Kette an einer am Tragflügel angeordneten (Seil-) Winde befestigt ist. Durch das Aufwickeln oder Abwickeln des Seils bzw. der Kette ist dann das entsprechende Tragflügelteil ein- bzw. ausschwenkbar.

Das erfindungsgemässe Luftfahrzeug löst unter anderem die technische Aufgabe, einen gegenüber dem Stand der Technik einfacheren, effizienteren und weniger störanfälligen Übergang vom Senkrechtflug (Vertikalflug) in den Waagrechtflug (Horizontalflug) zu ermöglichen. Weiterhin können das erste und/oder das zweite Getriebe als langlebiges und effizientes (Doppel-) Exzentergetriebe ausgestaltet sein, wodurch effizientere und langlebigere Antriebe ermöglicht sind.

In einer exemplarischen Ausführungsform des erfindungsgemässen Luftfahrzeugs weist jeder der Tragflügelteile auf
- zumindest eine erste Antriebsbatterie ausgebildet zur Versorgung des Propellermotors mit elektrischer Energie, wobei die erste Antriebsbatterie so im oder am Tragflügelteil angeordnet ist, dass sie dort austauschbar und/oder aufladbar ist,
- eine Kommunikationseinheit ausgebildet zum Empfang von Regelsignalen, insbesondere von Regelsignalen einer externen Sendequelle,
- eine Regeleinheit ausgebildet, jeweils in Abhängigkeit von den Regelsignalen, zum Regeln eines Schwenkwinkels des Tragflügelteils und zum Regeln der Rotation des Propellers, und/oder
- zumindest eine auf einer Oberfläche des Tragflügelteils angeordnete photovoltaische Zelle, die mit der ersten Antriebsbatterie verbunden ist und zum Aufladen der ersten Antriebsbatterie ausgebildet ist.

Diese Ausführungsform hat den Vorteil, dass eine Dezentralisierung der Antriebsbatterien ermöglicht ist. Es gibt damit nicht nur eine einzelne, große elektrische Energiequelle für die vier Propeller, sondern die Antriebsbatterie ist auf diese verteilt, womit die Energiedichte bezogen auf das gesamte Luftfahrzeug verringert wird und somit die Gefahr von Überhitzung auf ein Minimum verringert wird.

In einer weiteren exemplarischen Ausführungsform sind die beiden an der Transportkabine, insbesondere an dem Dach der Transportkabine, angeordneten Tragflügel einteilig ausgebildet. Dieser einteilig ausgebildete Tragflügel kann beispielsweise von oben auf das Dach aufgesetzt und dort befestigt werden. Die beiden jeweiligen Tragflügel können sich alternativ aber auch links und rechts derart an das Dach der Transportkabine anschließen, dass der einteilig ausgebildete Tragflügel das Dach der Transportkabine ausbildet.

In einer weiteren exemplarischen Ausführungsform sind der erste Tragflügelteil in einem Frontbereich und der zweite Tragflügelteil in einem Heckbereich des jeweiligen Tragflügels angeordnet.

Diese Ausführungsform hat den Vorteil, dass beim Übergang vom Senkrechtflug in einen Waagrechtflug gemäss der für das Luftfahrzeug vorgesehenen "normalen" Flugrichtung keine Umkehrung der Drehrichtung oder Änderung der Blatteinstellwinkel der Propellerrotoren des jeweiligen zweiten Tragflügelteils notwendig ist

In einer weiteren exemplarischen Ausführungsform ist jeder der Tragflügelteile im Wesentlichen halbkreisförmig ausgestaltet, sodass sich durch ein Ausschwenken des jeweiligen Tragflügelteils eine halbkreisförmige Aussparung im restlichen Tragflügel ergibt, und/oder weist jeder der Tragflügelteile zur Steifigkeitserhöhung in seinem Inneren eine Zellenstruktur auf, wobei die erste Antriebsbatterie in einer Zelle der Zellenstruktur angeordnet ist.

In einer weiteren exemplarischen Ausführungsform weist das erfindungsgemässe Luftfahrzeug weiterhin auf
- einen Luftkühlkreislauf, insbesondere mit mindestens einem Ventilator, wobei der Luftkühlkreislauf angeordnet ist zum Kühlen von zumindest einem aus: der ersten Antriebsbatterie, der zweiten Antriebsbatterie, des Propellermotors, der Regeleinheit und des mindestens einen Schrittmotors, insbesondere wobei die erste und/oder zweite Antriebsbatterie zur Versorgung des mindestens einen Ventilators mit elektrischer Energie ausgebildet ist, und/oder
- eine in der Transportkabine angeordnete Sendeeinheit, wobei die Kommunikationseinheit dazu ausgebildet ist, Regelsignale von der Sendeeinheit zu empfangen, insbesondere wobei die Sendeeinheit dazu ausgebildet ist, zumindest eines aus: Regelsignalen, Antikollisionssystem-Warnsignalen, Wetterinformationssignalen, Navigationssignalen von einer externen Sendequelle zu empfangen.

In einer weiteren exemplarischen Ausführungsform weist die Transportkabine eine Versorgerbatterie auf und der restliche Tragflügel auf seiner Oberfläche zumindest eine photovoltaische Zelle auf, die mit der Versorgerbatterie verbunden ist und zum Aufladen der Versorgerbatterie ausgebildet ist.

In einer weiteren exemplarischen Ausführungsform ist die erste Antriebsbatterie, die zweite Antriebsbatterie, und/oder die Versorgerbatterie
- als Feststoffbatterie ausgebildet,
- durch eine externe Energiequelle (z.B. geeignete Ladesäulen), insbesondere über ein Kabel, aufladbar, wobei das Aufladen der entsprechenden Batterie erfolgt, während die entsprechende Batterie noch im Luftfahrzeug eingebaut ist oder die Batterie zumindest temporär aus dem Luftfahrzeug entfernt ist, und/oder
- sobald die entsprechende Batterie entladen (leer) ist, durch eine entsprechende aufgeladene (volle) Batterie austauschbar.

In einer weiteren exemplarischen Ausführungsform weist jeder der Tragflügel einen Berührschutz auf, dazu ausgebildet,
- an einer Unterseite des Tragflügels angeordnet zu sein,
- eine, insbesondere halbkreisförmige, Schutzwand um den im ausgeschwenkten Zustand unterhalb des Tragflügels vorliegenden Propeller des zweiten Tragflügelteils bereitzustellen, und
- mittels der Schutzwand den Propeller vor einer physischen Berührung von einem Bereich ausserhalb des Berührschutzes abzuschirmen.

Erfindungsgemäss weist das Luftfahrzeug zwei Hilfsflügel auf, wobei jeweils einer der beiden Hilfsflügel an einer Längsseite, insbesondere an einem unteren Bereich der Längsseite, der Transportkabine angeordnet ist, wobei die zwei Hilfsflügel dazu ausgebildet sind, ein geschwindigkeitsproportionales Gegenmoment zu erzeugen, mittels welchem ein, insbesondere durch die Transportkabine und/oder den Berührschutz erhöhter, Luftwiderstand des Luftfahrzeugs ausgleichbar ist, wodurch eine
Nickbewegung einer Front des Luftfahrzeugs, insbesondere beim Waagrechtflug, verhinderbar ist und so eine Stabilisierung der Flugeigenschaften des Luftfahrzeugs erreichbar ist.

In einer weiteren exemplarischen Ausführungsform ist zumindest einer der folgenden Teile des Luftfahrzeugs
- Transportkabine,
- Tragflügel,
- erster Tragflügelteil,
- zweiter Tragflügelteil,
- Propeller,
- Propellermotor,
- erstes Getriebe,
- zweites Getriebe,
- Schwenkmittel,
- Hilfsflügel, oder
- Berührschutz,
zumindest überwiegend aus mindestens einem Leichtbaumaterial, insbesondere Carbon, vorzugsweise glasfaserverstärktes Carbon, Kevlar, Titan und/oder Aluminium.

In einer weiteren exemplarischen Ausführungsform
- ist der gegenüber dem Propeller liegende Grossteil des ersten Tragflügelteils derart ausgestaltet, dass der besagte Grossteil in einem ausgeschwenkten Zustand (also beim Senkrechtflug) einen ersten Standfuss für das Luftfahrzeug (vergleichbar mit den Landekufen eines Hubschraubers) ausbildet, insbesondere wobei sich der erste Standfuss zumindest annähernd an einem ersten Ende der Transportkabine ausbildet, und/oder
- (da der zweite Tragflügelteil des Luftfahrzeugs in die entgegengesetzte Richtung ausschwenkt und ein Stehen auf dem Propeller des zweiten Tragflügelteils die Funktionsfähigkeit des Luftfahrzeugs beeinträchtigen würde) weist die Transportkabine, insbesondere an einem Boden der Transportkabine, einen zweiten (separaten) Standfuss auf, insbesondere wobei der zweite Standfuss zumindest annähernd an einem dem ersten Ende der Transportkabine gegenüberliegenden zweiten Ende der Transportkabine angeordnet ist.

Mit anderen Worten betrifft die Erfindung ein Universalflugerät ("universal", weil es vertikal und horizontal fliegen kann) mit Elektroantrieb und Tiltflügeln, wobei jeder Tiltflügel sein eigenes Traktionssystem besitzt, bestehend aus Propellerflügel, Exzentergetriebe, Elektromotor, Schwenkmittel (z.B. Kettenantrieb), Traktionsbatterie, Leistungselektronik, scharnierartigen Tiltgelenken und wobei dieses Traktionssystem über Funk vom Cockpit aus und/oder vom Boden aus gesteuert werden kann. In anderen Worten ausgedrückt sind in manchen Ausführungsformen die elektrischen Antriebsmotoren für die Propeller und die Elemente für die Verstellung der schwenkbaren, halbkreisförmigen Tragflächenteile zumindest weitgehend in den schwenkbaren Tragflächenanteilen untergebracht, damit sie durch deren Gewichtswirkung ein stabiles Drehmoment bezüglich der Rotationsachse der Tiltrotoren erzeugen. In anderen Worten ausgedrückt ist in manchen Ausführungsformen die Verstellbarkeit der Tiltflügel eines Tragflügels gewährleistet durch zwei im oder am Tragflügel angeordnete Kettenantriebe, über deren jeweiliges erstes und zweites Kettenrad (oder auch Kettennuss) eine jeweilige Kette geführt ist. Gedreht werden die jeweiligen ersten Kettenräder von einem (oder von zwei) elektrischen Schrittmotor(en) mit hohem Haltemoment, sodass der jeweilige Tiltwinkel der Tiltflügel akkurat eingestellt werden kann. Im Gegensatz zu der feststehenden Lage der Triebwerke bei einem reinen Tragflächenflugzeug kann hier der Steigwinkel der Tragflächen von den verstellbaren Triebwerken bestimmt und mit großer Kraft gesteuert werden. Deshalb kommt man hier ohne die am Heck von Tragflächenflugzeugen notwendigen Leitwerke aus. Insbesondere ist für das erforderliche Drehmoment der verhältnismässig großen Propeller, etwa mit einem Durchmesser von 3 Metern, bei niedriger Drehzahl ein Exzentergetriebe mit z.B. einer Gesamtübersetzung von i = 36 und ein hochdrehender Gleichstrommotor mit über 25000 U/min im Tiltflügel vorgesehen. Bei vier Propellern liegt die Gesamtleistung damit beispielsweise bei 100 KW und das Gesamtgewicht ca. 900 kg.

Für die Kühlung der Motoren und der Exzentergetriebe ist insbesondere eine Luftkühlung (oder auch ein Luftkühlkreislauf) vorgesehen. Die bei der Fortbewegung des Luftfahrzeugs auftretenden Luftströme verlaufen an den Tragflügeln sowie an den ersten und zweiten Tragflügelteilen (Tiltflügeln) vorbei und kühlen dementsprechend deren Oberflächen / Aussenseiten. Dadurch, dass diese Oberflächen gekühlt werden, werden die Propellermotoren und die Exzentergetriebe, die an oder innerhalb der Tragflügelteile angeordnet sind, gleichzeitig mitgekühlt bzw. können ihre Wärme mittels Konvektionswärmefluss an die umgebenden (gekühlten) Teile abgeben und überhitzen dadurch nicht. Weiterhin können innerhalb des Tragflügels und/oder innerhalb der ersten und zweiten Tragflügelteile Strukturen (z.B. Lüftungsschächte) vorgesehen sein, durch welche die auftretenden Luftströme zumindest teilweise geleitet werden können, insbesondere wobei die Strukturen derart angeordnet sein können, dass die darin geleiteten Luftströme auf die Propellermotoren und/oder die Exzentergetriebe geleitet (und von den Propellermotoren und/oder den Exzentergetrieben wieder nach aussen) und diese durch den derart bereitgestellten Luftkühlkreislauf gekühlt werden können. Die Strukturen zur Leitung der Luftströme können auch derart innerhalb der Teile des Luftfahrzeugs angeordnet sein, dass die Luftströme bis in die Transportkabine (und von der Transportkabine wieder nach aussen) geleitet werden können, wodurch die Transportkabine durch den derart bereitgestellten Luftkühlkreislauf beispielsweise für die Passagiere auf eine angenehme Raumtemperatur oder für Kühlware auf eine deutlich niedrigere Temperatur gekühlt werden kann.

Für den Lufttransport innerhalb der Strukturen können unter anderem auch hierfür geeignete Ventilatoren (oder auch Lüfter) eingesetzt werden, deren Elektromotoren von der ersten Antriebsbatterie, der zweiten Antriebsbatterie, und/oder der Versorgerbatterie mit elektrischer Energie versorgt werden können.

In weiteren Ausführungsformen ist auf die Außenhaut zumindest eines von: den Propellern, der Transportkabine, den Tragflügelteilen und dem restlichen Tragflügel eine metallisch wirkende Schicht aufgetragen, die eine elektrostatische Aufladung und Blitzschlag (Faradaykäfig) und eine Eisbildung verhindert. In weiteren Ausführungsformen ist über einen Kreiselkompass in der Transportkabine eine Fluglagenanzeige für die Nickbewegung und Seitenneigung sowie eine Fluggeschwindigkeits-Anzeige vorgesehen. In weiteren Ausführungsformen ist im Cockpit eine Anzeige für den Status (z.B. Ladezustand, Temperatur) der Traktionsbatterie vorgesehen.

### Kurzbeschreibung der Zeichnungen

Das erfindungsgemässe Luftfahrzeug wird nachfolgend anhand von in den Figuren schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen. Im Einzelnen zeigen
Fig. 1: perspektivische Ansicht einer exemplarischen Ausführungsform des erfindungsgemässen Luftfahrzeugs;
Fig. 2: Ansicht einer exemplarischen Ausführungsform des erfindungsgemässen Luftfahrzeugs von oben;
Fig. 3: Seitenansicht einer exemplarischen Ausführungsform des erfindungsgemässen Luftfahrzeugs;
Fig. 4A-4C: schematische Darstellung einer exemplarischen Ausführungsform des ersten Getriebes;
Fig. 5A-5C: schematische Darstellung einer exemplarischen Ausführungsform des zweiten Getriebes,
Fig. 6: Ansicht der Anordnung einer exemplarischen Ausführungsform der Schwenkmittel am Tragflügel.

### Detaillierte Beschreibung der Zeichnungen

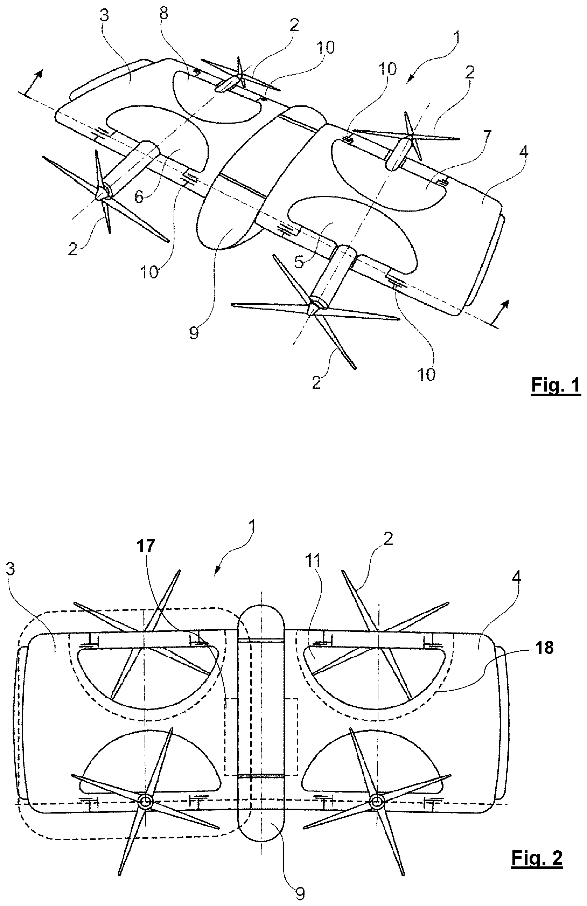

**Figur 1** zeigt in perspektivischer Darstellung von schräg oben das gesamte Luftfahrzeug 1 mit den vier Propellern 2 (oder auch Tiltrotoren genannt), mit den sich beidseitig der Transportkabine 9 erstreckenden Tragflügeln (Tragflächen) 3, 4 und mit den ersten Tragflügelteilen (halbkreisförmigen Tiltflügeln) 5, 6 und den zweiten Tragflügelteilen (halbkreisförmigen Tiltflügeln) 7, 8. In der gezeigten Ausführungsform ist die Transportkabine 9 als Passagierkabine ausgestaltet, die insbesondere für die Aufnahme von mindestens einer Person, bevorzugt für zwei oder mehr Personen ausgelegt ist. Falls eine entsprechende Steuerung über Funk vorgesehen ist, so kann unter Umständen auf einen menschlichen Piloten verzichtet werden, wodurch ein weiterer Fahrgast transportiert werden kann. Insbesondere ausgestattet mit einem längs und quer arbeiteten Kreiselkompass, einem Höhenmessgerät und mit einem satellitengesteuerten Navigationssystem kann ein solches Universalflugzeug völlig autonom betrieben werden. Andererseits kann zumindest basierend auf einem Navigationssystem (z.B. GPS) einem sich im Luftfahrzeug 1 befindlichen Piloten etwa angezeigt werden, wie weit es noch bis zur Zielposition ist. Hier kann eine Vorwarnung (z.B. "Ziel erreicht in 4 km oder 2 min") den Piloten darauf aufmerksam machen. Die Tragflügelteile 5-8 sind jeweils über ein scharnierartiges Gelenk 10 in einem der feststehenden (restlichen) Tragflügel 3, 4 um bis zu 90 Grad schwenkbar gelagert. Sie haben die Aufgabe, die Kräfte der Rotorpropeller 2 auf das übrige System zusammen mit der Passagierkabine 9 zu übertragen. Diese Gelenke 10 müssen hochtragfähig, weitgehend verschleißfrei und mit sehr wenig Reibungswiderstand über viele Jahre zuverlässig arbeiten. Deshalb sind sie bevorzugt mit Rollenlagern, insbesondere mit raumsparenden Nadellagern versehen. Sie können mit einer Lebensdauer-Fettfüllung geschmiert sein. Die Verstellung der Tiltflügel (Tragflügelteile) 5, 6, 7, 8 geschieht jeweils mit einem Schwenkmittel 12, hier der Kettantrieb 12, der in bekannter Weise mit einem ersten Kettenrad 54 und einem zweiten Kettenrad 55 funktioniert. Zur Betätigung des jeweiligen Kettenantriebs 12 dient jeweils ein elektrischer Schrittmotor 56, der entweder vom Cockpit aus oder automatisiert betätigt wird. Auch dieser jeweilige Schrittmotor 56 kann über ein jeweiliges Untersetzungsgetriebe 46 (auch als zweites Getriebe 46 bezeichnet) verfügen, beispielsweise ein Exzentergetriebe, insbesondere ein Doppel-Exzentergetriebe. Die Verstellung eines jeweiligen Tragflügelteils 5-8 vermittels eines solchen Kettenantriebs 12 stellt eine Ideallösung dar, da somit die gewaltigen Kreiselkräfte der hochdrehenden Propellermotoren überwunden werden können und der gewünschte Tiltwinkel akkurat eingestellt werden kann.

**Figur 2** zeigt das Luftfahrzeug 1 von oben, wobei die ersten Tiltflügel 5, 6 für den Vertikalflug ganz ausgeschwenkt sind und so die Frontpropeller 2 nach oben ausgerichtet sind und die zweiten Tiltflügel 7, 8 für den Vertikalflug ganz ausgeschwenkt sind und so die Heckpropeller 2 nach unten ausgerichtet sind. Das vollständige Ausschwenken legt jeweils halbkreisförmige Aussparungen bzw. Durchbrüche 11 in den restlichen Tragflügel 3,4 offen.

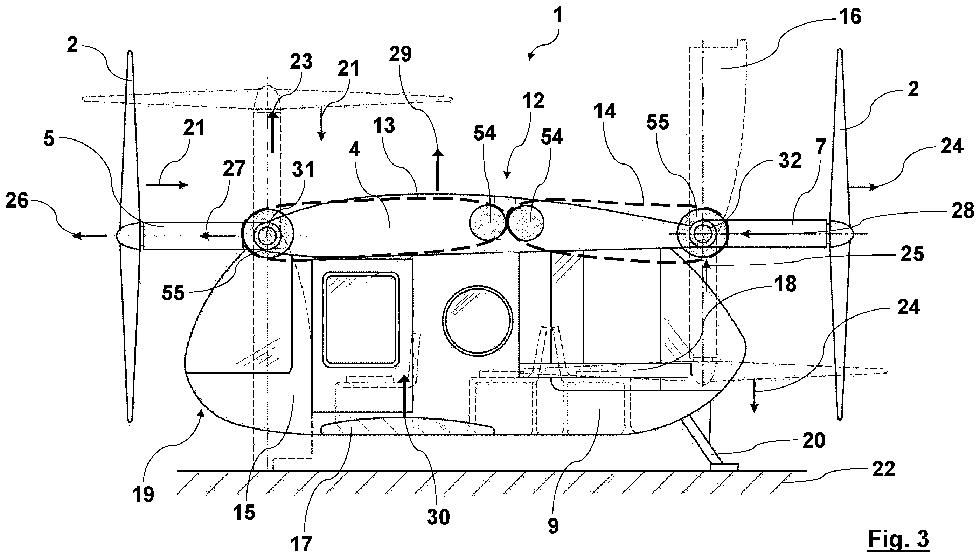

**Figur 3** zeigt eine Seitenansicht einer exemplarischen Ausführungsform des erfindungsgemässen Luftfahrzeugs 1. Für den Waagrechtflug/Horizontalflug haben der erste und der zweite Kettenantrieb 12 die Tragflügelteile 5, 7 (6, 8 hier nicht gezeigt) bündig eingefahren (gezeichnet mit durchgezogenen Linien). Der erste Tragflügelteil 5 wird für den Senkrechtstart/-flug so ausgeschwenkt, dass der Propeller 2 oberhalb des Tragflügels 3 rotiert, während der gegenüberliegende Grossteil 15 des ersten Tragflügelteils 5 unterhalb des Tragflügels 3 vorliegt (gezeichnet mit gestrichelten Linien). Beim zweiten Tragflügelteil 7 ist es genau entgegengesetzt, wobei hier der Propeller 2 unterhalb des Tragflügels 3 rotiert und der gegenüberliegende Grossteil 16 des Tragflügelteils 7 oberhalb des Tragflügels 3 vorliegt. Weiterhin weist die gezeigte Ausführungsform des Luftfahrzeugs 1 einen Hilfsflügel 17 und einen Berührschutz 18 auf. Der Hilfsflügel 17 ist dabei in einem unteren Bereich seitlich an der Transportkabine 9 angeordnet, also an einem unteren Bereich der Längsseite der Transportkabine 9, wobei der Hilfsflügel 17 dafür sorgt, dass insbesondere beim Waagrechtflug ein geschwindigkeitsproportionales Gegenmoment erzeugt wird, mittels welchem ein, insbesondere durch die Transportkabine 9 und/oder den Berührschutz 18 erhöhter, Luftwiderstand des Luftfahrzeugs 1 ausgeglichen wird, wodurch eine Nickbewegung einer Front 19 des Luftfahrzeugs 1, insbesondere beim Waagrechtflug, verhindert wird und so eine Stabilisierung der Flugeigenschaften des Luftfahrzeugs 1 erreicht wird. Der Berührschutz 18 ist an der Unterseite des Tragflügels 3 angeordnet und erstreckt sich davon ausgehend mit einer Trägerstruktur/Halterung in etwa genau so weit in Richtung des Bodens wie das zweite Tragflügelteil 7. An dem dem Boden zugewandten Ende der Halterung des Berührschutzes 18 ist eine sich waagrecht, insbesondere halbkreisförmig um den im ausgeschwenkten Zustand unterhalb des Tragflügels 3 vorliegenden Propeller 2 des zweiten Tragflügelteils 7, erstreckende Schutzwand angeordnet (der Berührschutz hat bei seitlicher Betrachtung somit eine Form, die vergleichbar mit dem Buchstaben L ist), die den Propeller 2 vor einer physischen Berührung von einem Bereich ausserhalb des Berührschutzes 18 abschirmt, unter anderem um so ein gefahrloses Ein- und Aussteigen der Passagiere zu ermöglichen.

Bei der gezeigten Ausführungsform ist der gegenüber dem Propeller 2 liegende Grossteil 15 des ersten Tragflügelteils 5 derart ausgestaltet, dass dieser im ausgeschwenkten Zustand (also für den Senkrechtflug) als Standfuss (vergleichbar mit den Landekufen eines Hubschraubers) dient. Da der zweite Tragflügelteil 7 des Luftfahrzeugs 1 in die entgegengesetzte Richtung ausschwenkt und ein Stehen auf dem Propeller 2 des zweiten Tragflügelteils 7 die Funktionsfähigkeit des Luftfahrzeugs 1 beeinträchtigen würde, weist die Transportkabine 9 an dem Ende, an dem der zweite Tragflügelteil 7 vorliegt (also bei der gezeigten Ausführungsform am Heck des Luftfahrzeugs 1), einen separaten Standfuss 20 auf. Da die Gewichtsreduktion gerade bei Luftfahrzeugen eine grosse Rolle spielt, um so zum einen überhaupt eine Flugfähigkeit sicherstellen zu können und zum anderen die Energieeffizienz beim Flug optimieren zu können (z.B. ist aufgrund eines verringerten Gewichts des Luftfahrzeugs der Kraftstoffverbrauch ebenfalls verringert), können die oben genannten Bauteile in einer exemplarischen Ausführungsform des gezeigten Luftfahrzeugs 1 zumindest überwiegend aus mindestens einem Leichtbaumaterial, insbesondere Carbon, vorzugsweise glasfaserverstärktes Carbon, Kevlar, Titan und/oder Aluminium ausgestaltet sein.

Insbesondere bei einer Ausgestaltung der entsprechenden Bauteile des Luftfahrzeugs 1 aus Leichtbaumaterialien und der Verwendung von batteriebetriebenen Elektromotoren als Propellermotoren und/oder Schrittmotoren, weist die entsprechende Ausführungsform des erfindungsgemässen Luftfahrzeugs 1 unter anderem die folgenden weiteren Vorteile gegenüber Luftfahrzeugen aus dem Stand der Technik auf:
- Reduzierteres Gesamtgewicht (z.B. durch Ausgestaltung der Bauteile aus Leichtbaumaterialien),
- Erhöhte Effizienz (z.B. verbesserte Energieübertragung von den Propellermotoren auf die Propeller durch Verwendung von effizienten, verschleiss- und reibungsarmen, langlebigen Doppel-Exzentergetrieben),
- Erhöhte Fluggeschwindigkeit (z.B. durch verbesserte Übersetzungs- bzw. Untersetzungsverhältnisse in dem als Doppel-Exzentergetriebe ausgestalteten ersten Getriebe),
- Grössere Reichweite (z.B. durch einen verringerten Energieverbrauch aufgrund des reduzierten Gewichts und/oder der effizienten Getriebe),
- Reduktion der Emissionen (z.B. durch die Verwendung von Elektromotoren (rein elektrischer Betrieb) und/oder den generell verringerten Energieverbrauch),
- Verbesserte Flugeigenschaften/Flugstabilität (z.B. durch die Hilfsflügel, die Nickbewegungen, etc. des Luftfahrzeugs verhindern),
- Vereinfachte Konstruktion (z.B. dadurch, dass das Schwenkmittel als platzsparender Kettenantrieb ausgestaltet werden kann, dass auf eine separate Steuerungseinheit, die eine Umkehrung der Drehrichtung oder eine Änderung der Blatteinstellwinkel der Propeller der zweiten Tragflügelteile (z.B. über eine Pitchregelung) steuern müsste, verzichtet werden kann, und/oder dass auf eine drehbare Lagerung der Rotorblätter in der Rotornabe für die Pitchregelung verzichtet werden kann),
- Geräuscharmer Betrieb (z.B. durch die Verwendung von Elektromotoren),
- Weniger Wartungsintensiv (z.B. durch langlebige Doppel-Exzentergetriebe und/oder den vereinfachten Austausch von leeren oder kaputten Batterien aufgrund der einfachen Zugänglichkeit der Batterien)
- Umweltfreundlicherer Betrieb (z.B. durch reduzierten Kraftstoffverbrauch, leiserer Betrieb, verringerte Emissionen, etc.), und
- Erhöhte Sicherheit (z.B. dadurch, dass eine dezentrale Anordnung der Batterien vorliegt, und/oder eine Umkehrung der Drehrichtung oder eine Änderung der Blatteinstellwinkel der Propeller der zweiten Tragflügelteile nicht mehr nötig ist, wobei somit zum einen auf ein kurzeitiges Aussetzen der Antriebskräfte dieser Propeller und zum anderen auf eine zusätzliche und zugleich störanfällige Steuerungseinheit verzichtet werden kann).

Der Übergang vom Senkrecht- zum Waagerechtflug ist zweifellos die komplexeste und im Hinblick auf die Flugsicherheit kritischste Phase eines solchen Luftfahrzeugs 1. Hier sind die aerodynamischen Kräfte aufgeteilt in solche aus den Propellerrotoren 2 und solche aus den feststehenden Tragflügel 3,4. Zugleich sind sie aufgeteilt in senkrechte und waagrechte Kraftkomponenten. Außerdem haben die Luftströme unterschiedliche Geschwindigkeitsrichtungen, sodass die aerodynamischen Kräfte nicht mehr in ihrer Wirkung eindeutig sind. Deshalb werden diese Verhältnisse auf dem Prüfstand im Windkanal im Vorhinein ermittelt und bei der Steuerung des Luftfahrzeugs 1 berücksichtigt.

Die in **Figur 3** eingezeichneten Pfeile verdeutlichen die Richtungen der beim Waagrechtflug bzw. beim Senkrechtflug auftretenden Luftströme und der dementsprechend wirkenden Kräfte. Beim Senkrechtflug weist der über dem Tragflügel 3 rotierende Propeller 2 des ersten Tragflügelteils 5 eine derartige Drehrichtung auf (beispielsweise im Uhrzeigersinn), dass der Luftstrom 21 in Richtung des Bodens 22 gerichtet ist. Die Auftriebskraft 23 wirkt bei diesem Propeller dem Luftstrom 21 entgegen, also in eine Richtung vom Boden 22 weg. Der unter dem Tragflügel 4 rotierende Propeller 2 des zweiten Tragflügelteils 7 weist die gleiche Drehrichtung auf (also beispielsweise ebenfalls im Uhrzeigersinn), sodass der Luftstrom 24 ebenfalls in Richtung des Bodens 22 gerichtet ist, weshalb auch bei diesem Propeller 2 die Auftriebskraft 25 in eine Richtung vom Boden 22 weg wirkt. Dadurch, dass die beiden Auftriebskräfte 23 und 25 jeweils senkrecht nach oben (vom Boden 22 weg) zeigen, wird ein senkrechtes Abheben des Luftfahrzeugs 1 ermöglicht. Dadurch, dass der Propeller 2 des zweiten Tragflügelteils 7 beim erfindungsgemässen Luftfahrzeug 1 unterhalb des Tragflügels 3 rotiert, verlaufen beim Übergang vom Senkrechtflug in den Waagrechtflug und dementsprechend beim Einschwenken des ersten und des zweiten Tragflügelteils 5, 7 die Luftströme 21 und 24 auch weiterhin in die gleiche Richtung (entgegen der Flugrichtung 26), weshalb auch bei beiden Propellern 2 die Antriebskräfte (Vortrieb) 27 und 28 in die gleiche Richtung (in Flugrichtung 26) wirken. Folglich ist eine Umkehrung der Drehrichtung oder eine Änderung des Blatteinstellwinkels (z.B. mittels einer Pitchregelung) des Propellers 2 des zweiten Tragflügelteils 7 beim erfindungsgemässen Luftfahrzeug 1 nicht mehr nötig. Dies ermöglicht einen gegenüber Luftfahrzeugen aus dem Stand der Technik vereinfachten und zugleich weniger störanfälligen Übergang vom Senkrechtflug (Vertikalflug) in den Waagrechtflug (Horizontalflug) und umgekehrt. Aufgrund der Form des Tragflügels 3 und/oder des Hilfsflügels 17 erfährt das Luftfahrzeug 1 auch beim Waagrechtflug durch die entsprechenden Flügel eine jeweilige Auftriebskraft 29, 30, die jeweils senkrecht nach oben (vom Boden 22 weg) wirkt und somit auch beim Waagrechtflug des Luftfahrzeugs 1 ein weiteres Aufsteigen ermöglicht.

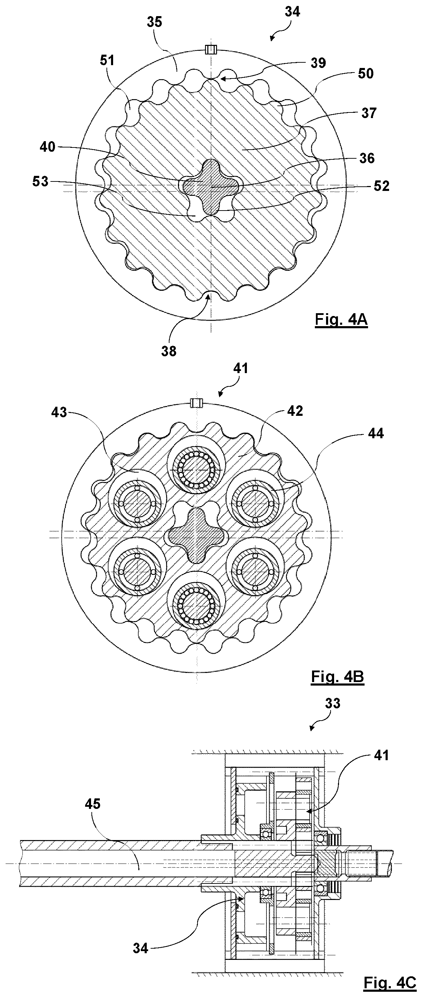

Die **Figuren 4A** bis **4C** zeigen jeweils eine schematische Darstellung einer exemplarischen Ausführungsform des ersten Getriebes 33, wobei dieses bei der gezeigten Ausführungsform als Doppel-Exzentergetriebe ausgebildet ist. Aus Gründen der Gewichtsreduktion, kann das als Doppel-Exzentergetriebe ausgestaltete erste Getriebe 33 in einer exemplarischen Ausführungsform zumindest überwiegend aus mindestens einem Leichtbaumaterial, insbesondere Carbon, vorzugsweise glasfaserverstärktes Carbon, Kevlar, Titan und/oder Aluminium ausgestaltet sein. Bei der gezeigten exemplarischen Ausführungsform weist das Doppel-Exzentergetriebe 33 eine Innenverzahnung mit einer Zahndifferenz von einem Zahn auf. Bei dem in **Figur 4A** gezeigten Sekundärteil 34 des Doppel-Exzentergetriebes 33 weist das Hohlrad 35 zwanzig Zähne auf, wobei die einzelnen Zähne jeweils eine Höhe von 5 bis 10 Millimeter, insbesondere 7 Millimeter, aufweisen und ausgehend vom Drehpunkt 36 jeweils zwischen zwei Zähnen ein Winkel von 18 Grad vorliegt. Die Zykloidenscheibe 37 des Sekundärteils 34 (z.B. hergestellt aus glasfaserverstärktem Carbon) weist an ihrem Aussenrand 19 Zähne 50 auf, wobei die einzelnen Zähne 50 jeweils eine Höhe von 5 bis 10 Millimeter, insbesondere 7 Millimeter, aufweisen, die auf der einen Seite 38 in die Vertiefungen 51 des Hohlrads 35 eingreifen und auf der entgegengesetzten Seite 39 auf den Zähnen 50 des Hohlrads 35 zum Liegen kommen. Die Zykloidenscheibe 37 (auch Cycloplatte) weist weiterhin eine Innenverzahnung von fünf auf, wobei die vier Zähne 52 des Ritzels 40 in die entsprechenden Vertiefungen 53 der Innenseite der Zykloidenscheibe 37 eingreifen. Die Zähne 52 des Ritzels 40 können aus Stahl herausgefräst, dann geschliffen und plasmanitriert sein, wodurch sie vorzugsweise möglichst glatt ausgestaltet werden. In den durch die Zahndifferenzen entstehenden Hohlräume kann ein Schmiermittel, z.B. ein Schmierfett (Wälzlagerfett), eingebracht werden, welches den sicheren, reibungslosen, verschleissarmen Betrieb des Doppel-Exzentergetriebes 33 sicherstellt. Das gezeigte Doppel-Exzentergetriebe 33 weist dabei eine Ovalverzahnung auf. Aufgrund der Zahnhöhe von insbesondere 7 Millimetern bis 10 Millimetern wird bei diesem Doppel-Exzentergetriebe 33 auch von einem Modul 7.0 bis 10 gesprochen. Weiterhin liegt ein Übersetzungsverhältnis von 6 vor, welches sich aus der Anzahl der Zähne des Hohlrads 35 und der Anzahl der Zähne des Ritzels 40 berechnet.

Der in **Figur 4B** gezeigte Primärteil 41 des Doppel-Exzentergetriebes 33 weist ebenfalls einen Aufbau gemäss dem des Sekundärteils 34 auf (insbesondere bezogen auf die Anzahl und die Grösse der Zähne der jeweiligen Komponenten) wobei jedoch die Zykloidenscheibe 42 sechs kreisförmige Ausschnitte 43 aufweist, in welche sechs Rollen / Bolzen 44 (auch als Lagerbolzen/Cyclobolzen bezeichnet, z.B. hergestellt aus Wälzlagerstahl, z.B. 100 Cr 6, mit einer Härte von mindestens 60 HRc, induktivgehärtet und geschliffen, in die Cycloplatte eingeeist oder eingeklebt) einer Rollenscheibe (als Teil der Antriebswelle) eingreifen (die beschriebene Anordnung kann auch als Wälzlager bezeichnet werden). Das Primärteil 41 weist ebenfalls ein Übersetzungsverhältnis von 6 auf und ist ebenfalls aus glasfaserverstärktem Carbon hergestellt. Dadurch, dass sowohl das Primärteil 41 als auch das Sekundärteil 34 ein Übersetzungsverhältnis von 6 aufweisen, liegt bei dem als erstes Getriebe 33 verwendeten Doppel-Exzentergetriebe des erfindungsgemässen Luftfahrzeugs 1 eine Gesamtübersetzung von 36 vor. Das erste Getriebe 33 steht in Wirkverbindung mit dem Propellermotor (mit anderen Worten: die vom Propellermotor bereitgestellte Kraft wird über das erste Getriebe 33 auf den Propeller 2 übertragen, wodurch sich dieser dann dreht), wobei der Propellermotor ein Elektromotor, insbesondere ein (Doppel-) Reluktanzmotor, z.B. Plusmotor C. Lungu, sein kann. Ein solcher Motor hat den Vorteil, dass keine seltenen Erden für Dauermagnete notwendig sind und dass Drehzahlen von bis zu 25000 Umdrehungen pro Minute (U/min) möglich sind. Weiterhin weist ein solcher Motor eine Steigleistung von bis zu 25 kW und einer Leistung in der Waagrechten von bis zu 6.5 kW auf.

In **Figur 4C** ist die Anordnung des Primärteils 41 (auch als Primärstufe bezeichnet) und des Sekundärteils 34 (auch als Sekundärstufe bezeichnet) in dem als Doppel-Exzentergetriebe ausgestalteten ersten Getriebe 33 des erfindungsgemässen Luftfahrzeugs 1 dargestellt. Der als Elektromotor ausgestaltete Propellermotor überträgt die von ihm bereitgestellte Bewegungsenergie (ca. 25000 U/min) auf die Primärstufe 41, die dann in Bewegung versetzt wird. Dadurch, dass die Primärstufe 41 mit der Sekundärstufe 34 verbunden ist, findet eine Übertragung der Bewegungsenergie auf die Sekundärstufe 34 statt. Die Sekundärstufe 34 ist wiederum mit der Propellerwelle 45 (weist beispielsweise eine Aussenverzahnung von fünf auf und hat etwa eine Länge von 2 m) verbunden, die durch die Bewegung der Sekundärstufe 34 ebenfalls in Bewegung versetzt wird und so den Propeller 2 antreibt. Aufgrund der Gesamtübersetzung von 36 weist die Propellerwelle 45 eine Drehzahl von ca. 700 U/min auf. Mit anderen Worten führt die Propellerwelle 45 durch die Exzentrizität der Zykloidenscheibe 37 eine Taumelbewegung mit der gleichen Exzentrizität wie die Zykloidenscheibe 37 aus, nur eben auf der Seite der Sekundärstufe 34..

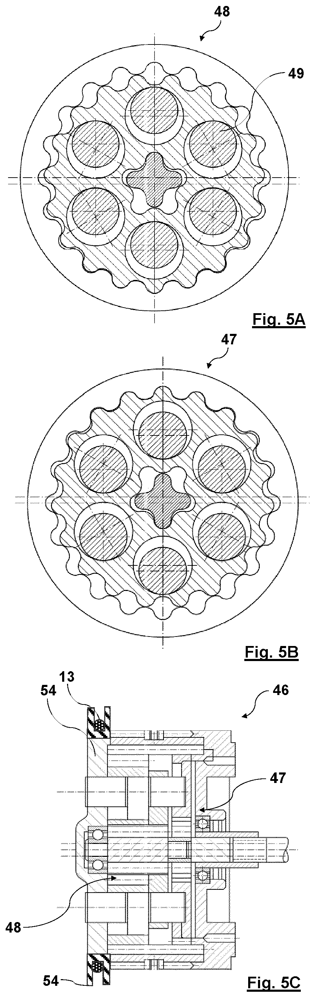

Die **Figuren 5A** bis **5C** zeigen jeweils eine schematische Darstellung einer exemplarischen Ausführungsform des zweiten Getriebes 46 zur Wirkverbindung zwischen dem Schrittmotor 56 und dem Schwenkmittel 12 (hier ein Kettenantrieb 12), wobei das zweite Getriebe 46 bei der gezeigten Ausführungsform als Doppel-Exzentergetriebe mit der Primärstufe 47 und der Sekundärstufe 48 ausgebildet ist. Aus Gründen der Gewichtsreduktion, kann das als Doppel-Exzentergetriebe ausgestaltete zweite Getriebe 46 in einer exemplarischen Ausführungsform ebenfalls zumindest überwiegend aus mindestens einem Leichtbaumaterial, insbesondere Carbon, vorzugsweise glasfaserverstärktes Carbon, Kevlar, Titan und/oder Aluminium ausgestaltet sein. Der in **Figur 5A** gezeigte Sekundärteil 48 und der in **Figur 5B** gezeigte Primärteil 47 des Doppel-Exzentergetriebes 46 sind dabei grundsätzlich, insbesondere bezogen auf die Anzahl und die Grösse der Zähne, die Zahndifferenz, die Materialien der jeweiligen Komponenten und das Übersetzungsverhältnis, wie der Primärteil 41 des Doppel-Exzentergetriebes 33 ausgestaltet, wobei bei der gezeigten Ausführungsform in den Sekundärteil 48 sechs Bolzen 49 (auch als Lagerbolzen/Cyclobolzen bezeichnet, z.B. hergestellt aus Wälzlagerstahl, z.B. 100 Cr 6, mit einer Härte von mindestens 60 HRc, induktivgehärtet, geschliffen, plasmanitriert und glattpoliert) einer Rollenscheibe eingreifen. Diese Rollenscheibe ist jedoch anders als beim Doppel-Exzentergetriebe 33, welches mit der Propellerwelle 45 verbunden ist, nicht mit einer Antriebswelle verbunden, sondern als Teil des ersten Kettenrads 54 (auch als Kettentrommel 54 bezeichnet) des Kettenabtriebs 12, das für das Bewegen einer Kette 13, 14 mittels einer Drehbewegung ausgebildet ist, ausgebildet. In einer anderen Ausführungsform des gezeigten Doppel-Exzentergetriebes 46 kann der Sekundärteil 48 mit der Antriebswelle 57 verbunden sein, die durch die Bewegung des Sekundärteils ebenfalls in Bewegung versetzt wird und so das erste Kettenrad 54 des Kettenabtriebs 12 antreibt.

Das zweite Getriebe 46 steht in Wirkverbindung mit dem Schrittmotor 56 (mit anderen Worten: die vom Schrittmotor 56 bereitgestellte Kraft wird über das zweite Getriebe 46 auf das erste Kettenrad 54 des Kettenantriebs 12 übertragen, wodurch sich dieses dann dreht und die Kette 13, 14 in Bewegung versetzt), wobei der Schrittmotor 56 ein Elektromotor, insbesondere ein (Doppel-) Reluktanzmotor, z.B. Plusmotor C. Lungu, sein kann. Dadurch, dass sowohl das Primärteil 47 als auch das Sekundärteil 48 ebenfalls ein Übersetzungsverhältnis von sechs aufweisen, liegt beim als zweites Getriebe 46 verwendeten Doppel-Exzentergetriebe des erfindungsgemässen Luftfahrzeugs 1 genau wie beim ersten Getriebe 33 eine Gesamtübersetzung von 36 vor.

In **Figur 5C** ist die Anordnung des Primärteils 47 (auch als Primärstufe bezeichnet) und des Sekundärteils 48 (auch als Sekundärstufe bezeichnet) in dem als Doppel-Exzentergetriebe ausgestalteten zweiten Getriebe 46 des erfindungsgemässen Luftfahrzeugs 1 dargestellt. Der als Elektromotor ausgestaltete Schrittrmotor 56 überträgt die von ihm bereitgestellte Bewegungsenergie auf die Primärstufe 47 (ca. 1500 U/min), die dann in Bewegung versetzt wird. Dadurch, dass die Primärstufe 47 mit der Sekundärstufe 48 verbunden ist, findet eine Übertragung der Bewegungsenergie auf die Sekundärstufe 48 statt. Die Sekundärstufe 48 ist wiederum mit dem ersten Kettenrad 54 (oder auch Kettentrommel 54) verbunden (oder mit der Antriebswelle 57, die wiederum mit dem ersten Kettenrad 54 verbunden ist), die durch die Bewegung der Sekundärstufe 48 in eine Drehbewegung versetzt wird und so die Kette 13, 14 in Bewegung versetzt. Aufgrund der Gesamtübersetzung von 36 weist das erste Kettenrad 54 eine Drehzahl von ca. 42 U/min auf.

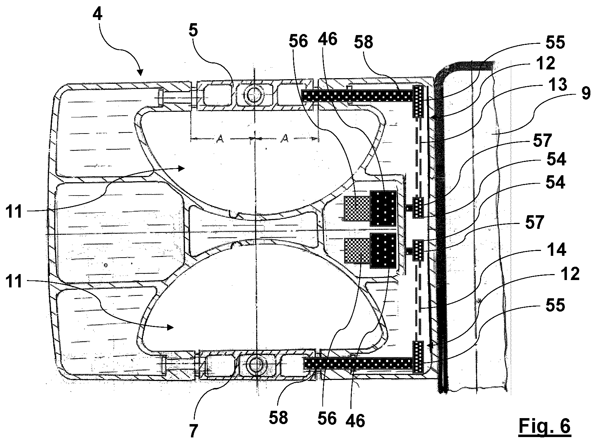

In **Figur 6** ist die Anordnung einer exemplarischen Ausführungsform des zur Ausschwenkung bzw. Einschwenkung des ersten Tragflügelteils 5 des Tragflügels 4 ausgebildeten ersten Schwenkmittels 12 und des zur Ausschwenkung bzw. Einschwenkung des zweiten Tragflügelteils 7 des Tragflügels 4 ausgebildeten zweiten Schwenkmittels 12 am Tragflügel 4 gezeigt. Das erste Schwenkmittel ist dabei als erster Kettenantrieb 12 und das zweite Schwenkmittel als zweiter Kettenantrieb 12 ausgebildet, wobei der erste und der zweite Kettenantrieb 12 jeweils ein erstes Kettenrad 54 und ein zweites Kettenrad 55 aufweisen, wobei bei der gezeigten Ausführungsform der Durchmesser des ersten Kettenrads 54 kleiner ist als der Durchmesser des zweiten Kettenrads 55. Der als Elektromotor ausgebildete jeweilige Schrittmotor 56 steht dabei in Wirkverbindung mit einem jeweiligen zweiten Getriebe 46, welches wiederum die vom jeweiligen Schrittmotor 56 bereitgestellte Energie auf die jeweilige Antriebswelle 57 überträgt, welche wiederum das jeweilige erste Kettenrad 54 in Bewegung versetzt. Die Bewegung des jeweiligen ersten Kettenrads 54 treibt die jeweilige Kette 13, 14 an, welche wiederum das jeweilige zweite Kettenrad 55 in Bewegung versetzt. Das jeweilige zweite Kettenrad 55 ist mit der jeweiligen Welle 58 verbunden, welche durch die Drehbewegung des jeweiligen zweiten Kettenrads 55 ebenfalls in eine Drehbewegung versetzt wird und so die Tiltbewegung des Tragflügelteils 5, 7 bewirkt.

Es versteht sich, dass diese dargestellten Figuren nur mögliche Ausführungsbeispiele schematisch darstellen.

## Patentansprüche

1. Luftfahrzeug (1) geeignet zum Vertikalflug und zum Horizontalflug, wobei das Luftfahrzeug (1) eine Transportkabine (9), insbesondere eine Passagierkabine, und zwei jeweils an der Transportkabine (9), insbesondere an einem Dach der Transportkabine (9), angeordnete Tragflügel (3, 4) aufweist, wobei
• jeweils einer der beiden Tragflügel (3, 4) einen ersten und einen zweiten Tragflügelteil (5, 6, 7, 8) aufweist,
• jeder der Tragflügelteile (5, 6, 7, 8) relativ zum restlichen Tragflügel (3, 4), insbesondere um bis zu 90 Grad, um eine jeweilige Schwenkachse (31,32) ausschwenkbar ausgebildet ist,
• jeder der Tragflügelteile (5, 6, 7, 8) aufweist
∘ zumindest einen Propeller (2), der im Tragflügelteil (5, 6, 7, 8) rotierbar um eine Rotationsachse gelagert ist und der in Bezug auf die Schwenkachse (31, 32) gegenüber zumindest einem Grossteil (15, 16) des Tragflügelteils (5, 6, 7, 8) angeordnet ist, wobei der Propeller (2) im Wesentlichen senkrecht zu einer Profilsehne des Tragflügelteils (5, 6, 7, 8) steht,
∘ einen Propellermotor ausgebildet zur Rotation des Propellers (2), und
∘ ein erstes Getriebe (33) zur Wirkverbindung zwischen dem Propeller (2) und dem Propellermotor,
• wobei der erste Tragflügelteil (5, 6) des jeweiligen Tragflügels (3, 4) derart ausschwenkbar ist, dass im ausgeschwenkten Zustand der Propeller (2) des ersten Tragflügelteils (5, 6) oberhalb des Tragflügels (3, 4) vorliegt,
• der zweite Tragflügelteil (7, 8) des jeweiligen Tragflügels (3, 4) derart ausschwenkbar ist, dass im ausgeschwenkten Zustand der Propeller (2) des zweiten Tragflügelteils (7, 8) unterhalb des Tragflügels (3, 4) vorliegt, und
• jeder der Tragflügel (3, 4) mindestens ein Schwenkmittel (12) aufweist, wobei mittels des mindestens einen Schwenkmittels (12) eine Ausschwenkung und/oder eine Rückstellung der Ausschwenkung des ersten und/oder des zweiten Tragflügelteils (5, 6, 7, 8) bereitstellbar ist,
**dadurch gekennzeichnet, dass**
das Luftfahrzeug (1) zwei Hilfsflügel (17) aufweist, wobei jeweils einer der beiden Hilfsflügel (17) an einer Längsseite, insbesondere an einem unteren Bereich der Längsseite, der Transportkabine (9) angeordnet ist, wobei die zwei Hilfsflügel (17) dazu ausgebildet sind, ein geschwindigkeitsproportionales Gegenmoment zu erzeugen, mittels welchem ein, insbesondere durch die Transportkabine (9) und/oder einen Berührschutz (18) erhöhter, Luftwiderstand des Luftfahrzeugs (1) ausgleichbar ist, wodurch eine Nickbewegung einer Front (19) des Luftfahrzeugs (1), insbesondere beim Waagrechtflug, verhinderbar ist und so eine Stabilisierung der Flugeigenschaften des Luftfahrzeugs (1) erreichbar ist.

2. Luftfahrzeug (1) nach Anspruch 1, wobei das mindestens eine Schwenkmittel (12) als Kettenantrieb ausgebildet ist, wobei der Kettenantrieb (12) ein erstes Kettenrad (54) und ein zweites Kettenrad (55) aufweist, wobei mittels einer Bewegung des ersten Kettenrads (54) eine Bewegung einer Kette (13, 14) des Kettenantriebs (12) bereitstellbar ist, wobei mittels der Bewegung der Kette (13, 14) des Kettenantriebs (12) das zweite Kettenrad (55) antreibbar ist, wobei mittels des angetriebenen zweiten Kettenrad (55) die Ausschwenkung und/oder die Rückstellung der Ausschwenkung des ersten und/oder des zweiten Tragflügelteils (5, 6, 7, 8) bereitstellbar ist.

3. Luftfahrzeug (1) nach Anspruch 1 oder 2, wobei jeder der Tragflügel (3, 4) aufweist
• mindestens einen Schrittmotor (56) ausgebildet zum Antrieb mindestens eines Schwenkmittels (12), und/oder
• zumindest eine zweite Antriebsbatterie ausgebildet zur Versorgung des mindestens einen Schrittmotors (56) mit elektrischer Energie, wobei die zweite Antriebsbatterie so im oder am Tragflügel (3, 4) angeordnet ist, dass sie dort austauschbar und/oder aufladbar ist,
insbesondere wobei zur Wirkverbindung zwischen dem mindestens einen Schrittmotor (56) und mindestens einem Schwenkmittel (12) mindestens ein zweites Getriebe (46) angeordnet ist.

4. Luftfahrzeug (1) nach einem der vorangehenden Ansprüche, wobei das erste Getriebe (33) und/oder das zweite Getriebe (46) ein Exzentergetriebe, insbesondere ein Doppel-Exzentergetriebe, ist.

5. Luftfahrzeug (1) nach Anspruch 4, wobei das jeweilige Exzentergetriebe (33, 46) eine Innenverzahnung mit einer Zahndifferenz im Bereich von 0 bis 5 Zähnen, insbesondere von einem Zahn, aufweist, insbesondere wobei eine Zahnform der Zähne des jeweiligen Exzentergetriebes (33, 46) dergestalt ist, dass das jeweilige Exzentergetriebe (33, 46) eine Ovalverzahnung aufweist.

6. Luftfahrzeug (1) nach Anspruch 2 und einem der Ansprüche 3 bis 5, wobei das erste Kettenrad (54) des Kettenantriebs (12) einen kleineren Durchmesser aufweist als das zweite Kettenrad (55) des Kettenantriebs (12), insbesondere wobei der Durchmesser des ersten Kettenrads (54) um den Faktor 2 bis 4 kleiner ist als der Durchmesser des zweiten Kettenrads (55).

7. Luftfahrzeug (1) nach einem der vorangehenden Ansprüche, wobei jeweils einer der beiden Tragflügel (3, 4) ein erstes Schwenkmittel (12) und ein zweites Schwenkmittel (12) aufweist, wobei mittels des ersten Schwenkmittels (12) die Ausschwenkung und/oder die Rückstellung der Ausschwenkung des ersten Tragflügelteils (5, 6) des jeweiligen Tragflügels (3, 4) und mittels des zweiten Schwenkmittels (12) die Ausschwenkung und/oder die Rückstellung der Ausschwenkung des zweiten Tragflügelteils (7, 8) des jeweiligen Tragflügels (3, 4) bereitstellbar ist.

8. Luftfahrzeug (1) nach einem der vorangehenden Ansprüche, wobei jeder der Tragflügelteile (5, 6, 7, 8) aufweist
• zumindest eine erste Antriebsbatterie ausgebildet zur Versorgung des Propellermotors mit elektrischer Energie, wobei die erste Antriebsbatterie so im oder am Tragflügelteil (5, 6, 7, 8) angeordnet ist, dass sie dort austauschbar und/oder aufladbar ist,
• eine Kommunikationseinheit ausgebildet zum Empfang von Regelsignalen, insbesondere von Regelsignalen einer externen Sendequelle,
• eine Regeleinheit ausgebildet, jeweils in Abhängigkeit von den Regelsignalen, zum Regeln eines Schwenkwinkels des Tragflügelteils (5, 6, 7, 8) und zum Regeln der Rotation des Propellers (2), und/oder
• zumindest eine auf einer Oberfläche des Tragflügelteils (5, 6, 7, 8) angeordnete photovoltaische Zelle, die mit der ersten Antriebsbatterie verbunden ist und zum Aufladen der ersten Antriebsbatterie ausgebildet ist.

9. Luftfahrzeug (1) nach einem der vorangehenden Ansprüche, wobei der erste Tragflügelteil (5, 6) in einem Frontbereich (19) und der zweite Tragflügelteil (7, 8) in einem Heckbereich des jeweiligen Tragflügels (3, 4) angeordnet sind.

10. Luftfahrzeug (1) nach Anspruch 8, weiterhin aufweisend
• einen Luftkühlkreislauf, insbesondere mit mindestens einem Ventilator, wobei der Luftkühlkreislauf angeordnet ist zum Kühlen von zumindest einem aus: der ersten Antriebsbatterie, der zweiten Antriebsbatterie, des Propellermotors, der Regeleinheit und des mindestens einen Schrittmotors, insbesondere wobei die erste und/oder zweite Antriebsbatterie zur Versorgung des mindestens einen Ventilators mit elektrischer Energie ausgebildet ist, und/oder
• eine in der Transportkabine (9) angeordnete Sendeeinheit, wobei die Kommunikationseinheit dazu ausgebildet ist, Regelsignale von der Sendeeinheit zu empfangen, insbesondere wobei die Sendeeinheit dazu ausgebildet ist, zumindest eines aus: Regelsignalen, Antikollisionssystem-Warnsignalen, Wetterinformationssignalen, Navigationssignalen von einer externen Sendequelle zu empfangen.

11. Luftfahrzeug (1) nach einem der vorangehenden Ansprüche, wobei die Transportkabine (9) eine Versorgerbatterie aufweist und wobei der restliche Tragflügel (3, 4) auf seiner Oberfläche zumindest eine photovoltaische Zelle aufweist, die mit der Versorgerbatterie verbunden ist und zum Aufladen der Versorgerbatterie ausgebildet ist.

12. Luftfahrzeug (1) nach einem der vorangehenden Ansprüche, wobei jeder der Tragflügel (3, 4) einen Berührschutz (18) aufweist, dazu ausgebildet,
• an einer Unterseite des Tragflügels (3, 4) angeordnet zu sein,
• eine, insbesondere halbkreisförmige, Schutzwand um den im ausgeschwenkten Zustand unterhalb des Tragflügels (3, 4) vorliegenden Propeller (2) des zweiten Tragflügelteils (7, 8) bereitzustellen, und
• mittels der Schutzwand den Propeller (2) vor einer physischen Berührung von einem Bereich ausserhalb des Berührschutzes (18) abzuschirmen.

13. Luftfahrzeug (1) nach einem der vorangehenden Ansprüche, wobei zumindest einer der folgenden Teile des Luftfahrzeugs (1)
• Transportkabine (9),
• Tragflügel (3, 4),
• erster Tragflügelteil (5, 6),
• zweiter Tragflügelteil (7, 8),
• Propeller (2),
• Propellermotor,
• erstes Getriebe (33),
• zweites Getriebe (46),
• Schwenkmittel (12),
• Hilfsflügel (17), oder
• Berührschutz (18),
zumindest überwiegend aus mindestens einem Leichtbaumaterial, insbesondere Carbon, Kevlar, Titan oder Aluminium, ist.

14. Luftfahrzeug (1) nach einem der vorangehenden Ansprüche, wobei
• der gegenüber dem Propeller (2) liegende Grossteil (15) des ersten Tragflügelteils (5, 6) derart ausgestaltet ist, dass der besagte Grossteil (15) in einem ausgeschwenkten Zustand einen ersten Standfuss für das Luftfahrzeug (1) ausbildet, insbesondere wobei sich der erste Standfuss zumindest annähernd an einem ersten Ende der Transportkabine (9) ausbildet, und/oder
• die Transportkabine (9), insbesondere an einem Boden der Transportkabine (9), einen zweiten Standfuss (20) aufweist, insbesondere wobei der zweite Standfuss (20) zumindest annähernd an einem dem ersten Ende der Transportkabine (9) gegenüberliegenden zweiten Ende der Transportkabine (9) angeordnet ist.

## Claims

1. Aircraft (1) suitable for vertical flight and horizontal flight, wherein the aircraft (1) has a transport cabin (9), in particular a passenger cabin, and two wings (3, 4) arranged in each case on the transport cabin (9), in particular on a roof of the transport cabin (9), wherein
• each of the two wings (3, 4) has a first and a second wing section (5, 6, 7, 8),
• each of the wing sections (5, 6, 7, 8) is designed to be pivotable relative to the rest of the wing (3, 4), in particular by up to 90 degrees, about a respective pivot axis (31, 32),
• each of the wing sections (5, 6, 7, 8) comprises
∘ at least one propeller (2) which is mounted in the wing section (5, 6, 7, 8) so as to be rotatable about an axis of rotation and which is arranged in relation to the pivot axis (31, 32) opposite at least a major part (15, 16) of the wing section (5, 6, 7, 8), wherein the propeller (2) is substantially perpendicular to a chord of the wing section (5, 6, 7, 8),
∘ a propeller motor designed to rotate the propeller (2), and
∘ a first gear (33) for the operative connection between the propeller (2) and the propeller motor,
• wherein the first wing section (5, 6) of the respective wing (3, 4) can be pivoted out in such a way that, in the pivoted-out state, the propeller (2) of the first wing section (5, 6) is located above the wing (3, 4),
• the second wing section (7, 8) of the respective wing (3, 4) can be pivoted out in such a way that, in the pivoted-out state, the propeller (2) of the second wing section (7, 8) is located below the wing (3, 4), and
• each of the wings (3, 4) has at least one pivoting means (12), wherein the at least one pivoting means (12) can be used to pivot out and/or return the pivoting out of the first and/or second wing section (5, 6, 7, 8),
**characterized in that**
the aircraft (1) has two auxiliary wings (17), wherein one of the two auxiliary wings (17) is arranged in each case on a longitudinal side, in particular on a lower region of the longitudinal side, of the transport cabin (9), wherein the two auxiliary wings (17) are designed to generate a speed-proportional counter-torque by means of which an increased air resistance of the aircraft (1), in particular due to the transport cabin (9) and/or a contact protection (18), can be compensated, whereby a pitching movement of a front (19) of the aircraft (1), in particular during horizontal flight, can be prevented and thus a stabilization of the flight characteristics of the aircraft (1) can be achieved.

2. Aircraft (1) according to claim 1, wherein the at least one pivoting means (12) is designed as a chain drive, wherein the chain drive (12) has a first sprocket (54) and a second sprocket (55), wherein a movement of a chain (13, 14) of the chain drive (12) can be provided by means of a movement of the first sprocket (54), wherein the second sprocket (55) can be driven by the movement of the chain (13, 14) of the chain drive (12), wherein the driven second sprocket (55) provides the pivoting out and/or the return of the pivoting out of the first and/or the second wing section (5, 6, 7, 8).

3. Aircraft (1) according to claim 1 or 2, wherein each of the wings (3, 4) has
• at least one stepper motor (56) designed to drive at least one pivoting means (12), and/or
• at least one second drive battery designed to supply the at least one stepper motor (56) with electrical energy, wherein the second drive battery is arranged in or on the wing (3, 4) in such a way that it can be replaced and/or recharged there,
• in particular wherein at least one second gear (46) is arranged to provide an operative connection between the at least one stepper motor (56) and at least one pivoting means (12).

4. Aircraft (1) according to one of the preceding claims, wherein the first gear (33) and/or the second gear (46) is an eccentric gear, in particular a double eccentric gear.

5. Aircraft (1) according to claim 4, wherein the respective eccentric gear (33, 46) has internal teeth with a tooth difference in the range from 0 to 5 teeth, in particular of one tooth, in particular wherein a tooth shape of the teeth of the respective eccentric gear (33, 46) is such that the respective eccentric gear (33, 46) has oval teeth.

6. Aircraft (1) according to claim 2 and one of claims 3 to 5, wherein the first sprocket (54) of the chain drive (12) has a smaller diameter than the second sprocket (55) of the chain drive (12), in particular wherein the diameter of the first sprocket (54) is smaller than the diameter of the second sprocket (55) by a factor of 2 to 4.

7. Aircraft (1) according to one of the preceding claims, wherein each of the two wings (3, 4) has a first pivoting means (12) and a second pivoting means (12), wherein the pivoting out and/or the return of the pivoting out of the first wing section (5, 6) of the respective wing (3, 4) can be provided by means of the first pivoting means (12) and the pivoting out and/or the return of the pivoting out of the second wing section (7, 8) of the respective wing (3, 4) can be provided by means of the second pivoting means (12).

8. Aircraft (1) according to one of the preceding claims, wherein each of the wing sections (5, 6, 7, 8) has
• at least one first drive battery designed to supply the propeller motor with electrical energy, wherein the first drive battery is arranged in or on the wing section (5, 6, 7, 8) in such a way that it can be replaced and/or recharged there,
• a communication unit designed to receive control signals, in particular control signals from an external transmission source,
• a control unit designed to control a pivot angle of the wing section (5, 6, 7, 8) and to control the rotation of the propeller (2), in each case depending on the control signals, and/or
• at least one photovoltaic cell arranged on a surface of the wing section (5, 6, 7, 8), which is connected to the first drive battery and is designed to charge the first drive battery.

9. Aircraft (1) according to one of the preceding claims, wherein the first wing section (5, 6) is arranged in a front region (19) and the second wing section (7, 8) is arranged in a rear region of the respective wing (3, 4).

10. Aircraft (1) according to claim 8, further comprising
• an air cooling circuit, in particular with at least one fan, wherein the air cooling circuit is arranged to cool at least one of: the first drive battery, the second drive battery, the propeller motor, the control unit and the at least one stepper motor, in particular wherein the first and/or second drive battery is designed to supply the at least one fan with electrical energy, and/or
• a transmission unit arranged in the transport cabin (9), wherein the communication unit is designed to receive control signals from the transmission unit, in particular wherein the transmission unit is designed to receive at least one of: control signals, anti-collision system warning signals, weather information signals, navigation signals from an external transmission source.

11. Aircraft (1) according to one of the preceding claims, wherein the transport cabin (9) has a supply battery and wherein the remaining wing (3, 4) has at least one photovoltaic cell on its surface, which is connected to the supply battery and is designed to charge the supply battery.

12. Aircraft (1) according to one of the preceding claims, wherein each of the wings (3, 4) has a contact protection (18) designed
• to be arranged on an underside of the wing (3, 4),
• to provide a protective wall, in particular a semicircular protective wall, around the propeller (2) of the second wing section (7, 8) located below the wing (3, 4) in the pivoted-out state, and
• to shield the propeller (2) from physical contact from an area outside the contact protection (18) using the protective wall.

13. Aircraft (1) according to one of the preceding claims, wherein at least one of the following sections of the aircraft (1)
• transport cabin (9),
• wing (3, 4),
• first wing section (5, 6),
• second wing section (7, 8),
• propeller (2),
• propeller motor,
• first gear (33),
• second gear (46),
• pivoting means (12),
• auxiliary wing (17), or
• contact protection (18),
is at least predominantly made of at least one lightweight material, in particular carbon, Kevlar, titanium, or aluminum.

14. Aircraft (1) according to one of the preceding claims, wherein
• the major part (15) of the first wing section (5, 6) opposite the propeller (2) is designed such that said major part (15) forms a first support foot for the aircraft (1) in a pivoted-out state, in particular wherein the first support foot is formed at least approximately at a first end of the transport cabin (9), and/or
• the transport cabin (9), in particular at a floor of the transport cabin (9), has a second support foot (20), in particular wherein the second support foot (20) is arranged at least approximately at a second end of the transport cabin (9) opposite the first end of the transport cabin (9).

## Revendications

1. Aéronef (1) apte au vol vertical et au vol horizontal, lequel aéronef (1) comporte une cabine de transport (9), en particulier une cabine pour des passagers, et deux ailes portantes (3, 4) disposées chacune sur la cabine de transport (9), en particulier sur un toit de la cabine de transport (9), dans lequel
• chacune des deux ailes portantes (3, 4) comporte une première partie d'aile portante (5, 6, 7, 8) et une deuxième,
• chacune des parties d'aile portante (5, 6, 7, 8) est conçue de façon à pouvoir basculer par rapport au reste de l'aile portante (3, 4), en particulier de jusqu'à 90 degrés, autour d'un axe de pivotement (31, 32) respectif,
• chacune des parties d'aile portante (5, 6, 7, 8) comporte
∘ au moins une hélice (2) qui est supportée dans la partie d'aile portante (5, 6, 7, 8) avec possibilité de rotation autour d'un axe de rotation et qui est disposée, par rapport à l'axe de pivotement (31, 32), vis-à-vis d'au moins une grande partie (15, 16) de la partie d'aile portante (5, 6, 7, 8), l'hélice (2) étant sensiblement perpendiculaire à une corde de profil de la partie d'aile portante (5, 6, 7, 8),
∘ un moteur d'hélice conçu pour la rotation de l'hélice (2) et
∘ une première transmission (33) pour la liaison active entre l'hélice (2) et le moteur d'hélice,
• la première partie d'aile portante (5, 6) de chaque aile portante (3, 4) pouvant basculer de telle façon que, dans l'état basculé, l'hélice (2) de la première partie d'aile portante (5, 6) se trouve au-dessus de l'aile portante (3, 4),
• la deuxième partie d'aile portante (7, 8) de chaque aile portante (3, 4) pouvant basculer de telle façon que, dans l'état basculé, l'hélice (2) de la deuxième partie d'aile portante (7, 8) se trouve en dessous de l'aile portante (3, 4)
et
• chacune des ailes portantes (3, 4) comportant au moins un moyen de pivotement (12), lequel au moins un moyen de pivotement (12) permet un basculement et/ou un retour de basculement de la première partie d'aile portante (5, 6, 7, 8) et/ou de la deuxième,
**caractérisé en ce que**
l'aéronef (1) comporte deux ailes auxiliaires (17), une des deux ailes auxiliaires (17) étant disposée sur chaque côté longitudinal, en particulier sur une région inférieure de chaque côté longitudinal, de la cabine de transport (9), les deux ailes auxiliaires (17) étant conçues pour créer un couple résistant proportionnel à la vitesse au moyen duquel une résistance aérodynamique de l'aéronef (1), en particulier accrue par la cabine de transport (9) et/ou par une protection contre le contact (18), peut être compensée, de telle sorte qu'un mouvement de tangage d'un avant (19) de l'aéronef (1), en particulier en vol horizontal, peut être empêché et que les qualités en vol de l'aéronef (1) peuvent ainsi être stabilisées.

2. Aéronef (1) selon la revendication 1, dans lequel l'au moins un moyen de pivotement (12) est conçu comme un entraînement par chaîne, lequel entraînement par chaîne (12) comporte une première roue à chaîne (54) et une deuxième roue à chaîne (55), un mouvement de la première roue à chaîne (54) pouvant produire un mouvement d'une chaîne (13, 14) de l'entraînement par chaîne (12), le mouvement de la chaîne (13, 14) de l'entraînement par chaîne (12) pouvant entraîner la deuxième roue à chaîne (55), la deuxième roue à chaîne (55) entraînée pouvant produire le basculement et/ou le retour de basculement de la première partie d'aile portante (5, 6, 7, 8) et/ou de la deuxième.

3. Aéronef (1) selon la revendication 1 ou 2, dans lequel chacune des ailes portantes (3, 4) comporte
• au moins un moteur pas-à-pas (56) conçu pour entraîner au moins un moyen de pivotement (12) et/ou
• au moins une deuxième batterie de propulsion conçue pour alimenter l'au moins un moteur pas-à-pas (56) en énergie électrique, laquelle deuxième batterie de propulsion est disposée dans ou sur l'aile portante (3, 4) de façon à pouvoir y être échangée et/ou remplacée,
au moins une deuxième transmission (46) étant en particulier disposée en vue de la liaison active entre l'au moins un moteur pas-à-pas (56) et l'au moins un moyen de pivotement (12).

4. Aéronef (1) selon l'une des revendications précédentes, dans lequel la première transmission (33) et/ou la deuxième transmission (46) est une transmission à excentrique, en particulier une transmission à double excentrique.

5. Aéronef (1) selon la revendication 4, dans lequel chaque transmission à excentrique (33, 46) comporte une denture interne avec une différence de dents comprise entre 0 et 5 dents, en particulier d'une dent, en particulier dans lequel une forme de dent des dents de chaque transmission à excentrique (33, 46) est conformée de telle façon que chaque transmission à excentrique (33, 46) comporte une denture ovale.

6. Aéronef (1) selon la revendication 2 et une des revendications 3 à 5, dans lequel la première roue à chaîne (54) de l'entraînement par chaîne (12) présente un plus petit diamètre que la deuxième roue à chaîne (55) de l'entraînement par chaîne (12), en particulier dans lequel le diamètre de la première roue à chaîne (54) est plus petite d'un facteur 2 à 4 que le diamètre de la deuxième roue à chaîne (55).

7. Aéronef (1) selon l'une des revendications précédentes, dans lequel chacune des deux ailes portantes (3, 4) comporte un premier moyen de pivotement (12) et un deuxième moyen de pivotement (12), le basculement et/ou le retour de basculement de la première partie d'aile portante (5, 6) de chaque aile portante (3, 4) pouvant être réalisés au moyen du premier moyen de pivotement (12) et le basculement et/ou le retour de basculement de la deuxième partie d'aile portante (7, 8) de chaque aile portante (3, 4) au moyen du deuxième moyen de pivotement (12).

8. Aéronef (1) selon l'une des revendications précédentes, dans lequel chacune des parties d'aile portante (5, 6, 7, 8) comporte
• au moins une première batterie de propulsion conçue pour alimenter le moteur d'hélice en énergie électrique, la première batterie de propulsion étant disposée dans ou sur la partie d'aile portante (5, 6, 7, 8) de façon à pouvoir y être échangée et/ou chargée,
• une unité de communication conçue pour recevoir des signaux de régulation, en particulier des signaux de régulation d'une source d'émission externe,
• une unité de régulation conçue pour réguler, en fonction des signaux de régulation, un angle de pivotement de chaque partie d'aile portante (5, 6, 7, 8) et pour réguler la rotation de l'hélice (2), et/ou
• au moins une cellule photovoltaïque disposée sur une surface de la partie d'aile portante (5, 6, 7, 8), qui est connectée à la première batterie de propulsion et qui est conçue pour charger la première batterie de propulsion.

9. Aéronef (1) selon l'une des revendications précédentes, dans lequel la première partie d'aile portante (5, 6) est disposée dans une région avant (19) et la deuxième partie d'aile portante (7, 8) dans une région arrière de chaque aile portante (3, 4).

10. Aéronef (1) selon la revendication 8, comportant en outre
• un circuit de refroidissement par air, en particulier avec au moins un ventilateur, lequel circuit de refroidissement par air est disposé de façon à refroidir au moins : soit la première batterie de propulsion, soit la deuxième batterie de propulsion, soit le moteur d'hélice, soit l'unité de régulation, soit l'au moins un moteur pas-à-pas, la première batterie de propulsion et/ou la deuxième étant en particulier conçues pour alimenter l'au moins un ventilateur en énergie électrique, et/ou
• une unité d'émetteur disposée dans la cabine de transport (9), l'unité de communication étant conçue pour recevoir des signaux de régulation de l'unité d'émetteur, laquelle unité d'émetteur est en particulier conçue pour recevoir au moins : soit des signaux de régulation, soit des signaux d'alerte d'un système anticollision, soit des signaux d'informations météorologiques, soit des signaux de navigation d'une source d'émission externe.

11. Aéronef (1) selon l'une des revendications précédentes, dans lequel la cabine de transport (9) comporte une batterie d'alimentation et dans lequel le reste de l'aile portante (3, 4) comporte sur sa surface au moins une cellule photovoltaïque qui est connectée à la batterie d'alimentation et conçue pour charger la batterie d'alimentation.

12. Aéronef (1) selon l'une des revendications précédentes, dans lequel chacune des ailes portantes (3, 4) comporte une protection contre le contact (18) conçue
• pour être disposée sur une face inférieure de l'aile portante (3, 4),
• pour former une paroi protectrice, en particulier semicirculaire, autour de l'hélice (2) de la deuxième partie d'aile portante (7, 8) qui se trouve dans l'état basculé en dessous de l'aile portante (3, 4) et
• pour protéger l'hélice (2), au moyen de la paroi protectrice, d'un contact physique avec une zone située à l'extérieur de la protection contre le contact (18).

13. Aéronef (1) selon l'une des revendications précédentes, dans lequel au moins une des parties suivantes de l'aéronef (1) :
• cabine de transport (9),
• aile portante (3, 4),
• première partie d'aile portante (5, 6),
• deuxième partie d'aile portante (7, 8),
• hélice (2),
• moteur d'hélice,
• première transmission (33),
• deuxième transmission (46),
• moyen de pivotement (12),
• ailes auxiliaires (17) ou
• protection contre le contact (18)
est faite au moins en majeure partie d'au moins un matériau léger, en particulier de carbone, de Kevlar, de titane ou d'aluminium.

14. Aéronef (1) selon l'une des revendications précédentes, dans lequel
• la grande partie (15) de la première partie d'aile portante (5, 6) située vis-à-vis de l'hélice (2) est conçue pour que ladite grande partie (15) forme, dans un état basculé, un premier pied d'appui pour l'aéronef (1), le premier pied d'appui se formant en particulier, au moins approximativement, à une première extrémité de la cabine de transport (9), et/ou
• la cabine de transport (9) comporte, en particulier sur un plancher de la cabine de transport (9), un deuxième pied d'appui (20), le deuxième pied d'appui (20) étant en particulier disposé, au moins approximativement, à une deuxième extrémité de la cabine de transport (9) opposée à la première extrémité de la cabine de transport (9).
